# EUROPÄISCHE PATENTSCHRIFT

(11) **EP 4 549 753 B1**
(45) Veröffentlichungstag und Bekanntmachung des Hinweises auf die Patenterteilung: **15.04.2026**
(21) Anmeldenummer: 23207301.5
(22) Anmeldetag: 01.11.2023
(51) Int. Cl.: F16B 2/14, F16B 7/02, F16B 7/04, F16B 7/18, F16B 13/08

(54) **KOPPLUNGSEINRICHTUNG**
COUPLING DEVICE
DISPOSITIF D'ACCOUPLEMENT

(43) Veröffentlichungstag der Anmeldung: 07.05.2025
(73) Patentinhaber: Baresic, Darijo, 8703 Erlenbach (CH)
(72) Erfinder: Baresic, Darijo, 8703 Erlenbach (CH)
(74) Vertreter: Keller Schneider Patent- und Markenanwälte AG

(56) Entgegenhaltungen:
- WO-A1-2014/054840
- DE-U1- 20 218 988
- US-B2- 7 444 922

## Beschreibung

### Technisches Gebiet

Die Erfindung betrifft eine Kopplungseinrichtung zum Verbinden von zwei zu verbindenden Elementen, welche zwei Elemente je beidseitig eine beidseitig mit je mindestens einem Hinterschnitt hinterschnittene und somit mit mindestens zwei Hinterschnitten hinterschnittene Nut, aufweisen. Diese Kopplungseinrichtung umfasst ein erstes Klemmteil und ein zweites Klemmteil und somit zwei Klemmteile. Zu beiden der zwei Klemmteilen ist je eine Längsrichtung, eine senkrecht zur Längsrichtung ausgerichtete erste Richtung, eine sowohl senkrecht zur Längsrichtung als auch senkrecht zur ersten Richtung ausgerichtete zweite Richtung, eine zur ersten Richtung entgegengesetzt ausgerichtete dritte Richtung und eine zur zweiten Richtung entgegengesetzt ausgerichtete vierte Richtung definiert. Das erste Klemmteil weist eine Wirkfläche auf, welche Wirkfläche zur Längsrichtung des ersten Klemmteils geneigt ist. Das zweite Klemmteil weist eine Wirkfläche auf, welche Wirkfläche zur Längsrichtung des zweiten Klemmteils geneigt ist. Weiter weist das erste Klemmteil eine in die erste Richtung des ersten Klemmteils vorstehende erste Vorsprunganordnung zum Hintergreifen eines ersten des wenigstens einen Hinterschnitts der Nut in einem ersten der zwei zu verbindenden Elemente auf. Zudem weist das zweite Klemmteil eine in die erste Richtung des zweiten Klemmteils vorstehende erste Vorsprunganordnung zum Hintergreifen eines ersten des wenigstens einen Hinterschnitts der Nut in einem zweiten der zwei zu verbindenden Elemente auf. Die I<opplungseinrichtung umfasst zudem eine Spanneinrichtung zum aufeinander zu Spannen der zwei Klemmteile im Wesentlichen entlang einer Längsachse der I<opplungs-einrichtung. In einem zusammengesetzten Zustand der Kopplungseinrichtung sind die zwei Klemmteile je mit ihrer Längsrichtung im Wesentlichen entlang der Längsachse der I<opplungseinrichtung ausgerichtet, während die erste Richtung des ersten Klemmteils und die erste Richtung des zweiten Klemmteils im Wesentlichen parallel zueinander ausgerichtet sind und die zweite Richtung des ersten Klemmteils und die zweite Richtung des zweiten Klemmteils im Wesentlichen parallel zueinander ausgerichtet sind, und die zwei Klemmteile je mit ihren Wirkflächen einander zugewandt hintereinander entlang der Längsachse angeordnet und durch die Spanneinrichtung entlang der Längsachse aufeinander zu spannbar oder aufeinander zu gespannt sind. Wenn durch die Spanneinrichtung die zwei Klemmteile entlang der Längsachse aufeinander zu gespannt werden, werden aufgrund des Zusammenwirkens der Wirkflächen das erste Klemmteil und das zweite Klemmteil relativ zueinander in eine Richtung quer zur Längsachse der Kopplungseinrichtung gedrückt, sodass die am ersten Klemmteil angeordnete erste Vorsprunganordnung und die am zweiten Klemmteil angeordnete erste Vorsprunganordnung zueinander hin gedrückt werden.

### Stand der Technik

Die US 7 444 922 B zeigt eine solche Kopplungseinrichtung zum Verbinden von zwei zu verbindenden Elementen.

Kopplungseinrichtungen, welche zum eingangs genannten technischen Gebiet gehören, sind bekannt. Ein Beispiel einer solchen Kopplungseinrichtung ist in der DE 203 17 404 U1 der DE-STA-CO Metallerzeugnisse GmbH beschrieben.

Derartige bekannte Kopplungseinrichtungen ermöglichen es zwar, zwei zu verbindende Elemente, welche zwei Elemente je eine beidseitig mit je mindestens einem Hinterschnitt hinterschnittene und somit mit mindestens zwei Hinterschnitten hinterschnittene Nut aufweisen, auf einfache Art und Weise zu verbinden: Hierzu werden die zwei zu verbindenden Elemente mit ihren Nuten parallel zueinander ausgerichtet und mit ihren Nuten sich gegenüberliegend in Kontakt gebracht und die Kopplungseinrichtung wird im zusammengesetzten Zustand mit ihrer Längsachse parallel zu den Nuten ausgerichtet in den durch die sich gegenüberliegenden Nuten gebildeten Raum eingeführt und festgesetzt, indem durch Spannen der Spanneinrichtung die beiden Klemmteile entlang der Längsachse aufeinander zu gespannt werden. Aufgrund des Zusammenwirkens der Wirkflächen werden dabei das erste Klemmteil und das zweite Klemmteil relativ zueinander in eine Richtung quer zur Längsachse der Kopplungseinrichtung gedrückt, sodass die am ersten Klemmteil angeordnete erste Vorsprunganordnung und die am zweiten Klemmteil angeordnete erste Vorsprunganordnung zueinander hin gedrückt werden. Da die Kopplungseinrichtung in den durch die sich gegenüberliegenden Nuten gebildeten Raum eingeführt ist, hintergreift die am ersten Klemmteil angeordnete erste Vorsprunganordnung den ersten des wenigstens einen Hinterschnitts der Nut an einem ersten der zwei zu verbindenden Element und hintergreift die am zweiten Klemmteil angeordnete erste Vorsprunganordnung den ersten des wenigstens einen Hinterschnitts der Nut an einem zweiten der zwei zu verbindenden Elementen. Aufgrund dieses Hintergreifens werden durch das zueinander hin drücken der ersten Vorsprunganordnung des ersten Klemmteils und der zweiten Vorsprunganordnung des zweiten Klemmteils die zwei zu verbindenden Elemente zusammengeklemmt. Durch dieses Zusammenklemmen werden die zwei zu verbindenden Elemente verbunden.

Derartige I<opplungseinrichtungen haben den Nachteil, dass sie beim Verbinden von zwei zu verbindenden Elemente keine präzise Positionierung der beiden Elemente relativ zueinander sicherstellen. Falls die zwei zu verbindenden Elemente in eine Richtung quer zu den Nuten präzise zueinander positioniert miteinander verbunden werden sollen, so müssen die zwei Elemente zuerst korrekt zueinander positioniert werden und in dieser Positionierung gehalten werden, bis eine oder mehrere Kopplungseinrichtungen in den durch die sich gegenüberliegenden Nuten gebildeten Raum eingeführt und festgesetzt sind. Erst wenn die I<opplungseinrichtungen in die Nuten festgesetzt sind, kann aufgehört werden, die zwei nun verbundenen Elemente in der korrekten Positionierung zueinander zu halten. Daher ist die Verwendung von derartigen I<opplungseinrichtungen sehr aufwändig und umständlich.

Eine I<opplungseinrichtung, welche zumindest bis zu einem gewissen Grad eine Positionierung der zwei miteinander zu verbindenden Elemente relativ zueinander in eine Richtung quer zu den Nuten erleichtert, ist in der EP 0 837 253 A1 der Festo AG & Co beschrieben. Bei dieser Kopplungseinrichtung weist eines der zwei Klemmteile rippenartige Zentriervorsprünge auf, welche sich an den Randabschnitten dieses Klemmteils unmittelbar neben der Spannfläche befinden, mit welcher Spannfläche die Hinterschnitte der Nut hintergriffen werden.

Solche I<opplungseinrichtungen erleichtern zwar die Positionierung der zwei miteinander zu verbindenden Elemente relativ zueinander in eine Richtung quer zu den Nuten bis zu einem gewissen Grad. Sie haben aber immer noch den Nachteil, dass bei der Montage die zwei zu verbindenden Elemente in die Richtung quer zu den Nuten recht präzise zueinander positioniert werden und in dieser Positionierung gehalten werden müssen, bis die Spanneinrichtung gespannt und das jeweilige I<opplungselement festgesetzt ist. Zudem besteht bei solchen I<opplungseinrichtungen die Gefahr, dass durch die rippenartigen Zentriervorsprünge der Rand der Hinterschnitte der Nut gequetscht und damit beschädigt wird.

### Darstellung der Erfindung

Aufgabe der Erfindung ist es, eine dem eingangs genannten technischen Gebiet zugehörende Kopplungseinrichtung zu schaffen, welche beim Verbinden der zwei zu verbindenden Elemente auf einfache und zuverlässige Art reproduzierbar eine korrekte Positionierung der zwei zu verbindenden Elemente in eine Richtung quer zu den Nuten in den zwei zu verbindenden Elementen ermöglicht.

Die Lösung der Aufgabe ist durch die Merkmale des Anspruchs 1 definiert. Gemäss der Erfindung weist ein senkrecht auf die Wirkfläche des ersten Klemmteils stehender Normalenvektor sowohl eine in die erste Richtung des ersten Klemmteils zeigende Komponente als auch eine in die zweite Richtung des ersten Klemmteils zeigende Komponente auf, und weist ein senkrecht auf die Wirkfläche des zweiten Klemmteils stehender Normalenvektor sowohl eine in die dritte Richtung des zweiten Klemmteils zeigende Komponente als auch eine in die vierte Richtung des zweiten Klemmteils zeigende Komponente auf.

Die zwei mit der erfindungsgemässen Kopplungseinrichtung verbindbaren bzw. zu verbindenden Elemente weisen je eine mit wenigstens einem Hinterschnitt hinterschnittene Nut auf. Vorzugsweise verläuft dabei der wenigstens eine Hinterschnitt entlang der Längsrichtung der jeweiligen Nut entlang der jeweiligen Nut. Die zwei mit der erfindungsgemässen Kopplungseinrichtung verbindbaren bzw. zu verbindenden Elemente können aber auch je eine beidseitig mit je mindestens einem Hinterschnitt hinterschnittene Nut aufweisen. D.h., die Nuten der zwei verbindbaren bzw. zu verbindenden Elemente sind in diesem Fall mit mindestens zwei Hinterschnitten hinterschnitten. Vorzugsweise verlaufen die mindestens zwei Hinterschnitte dabei beidseitig entlang der Längsrichtung der jeweiligen Nut entlang der jeweiligen Nut. Nuten mit einem T-förmigen oder einem t-förmigen Querschnitt sind beispielsweise derartige beidseitig mit je einem Hinterschnitt hinterschnittene Nuten, bei welchen die zwei Hinterschnitte beidseitig entlang der Längsrichtung der jeweiligen Nut entlang der jeweiligen Nut verlaufen.

Erfindungsgemäss weist das erste Klemmteil eine Wirkfläche auf, welche Wirkfläche zur Längsrichtung des ersten Klemmteils geneigt ist. Somit ist der senkrecht auf die Wirkfläche des ersten Klemmteils stehende Normalenvektor zwar nicht parallel zur Längsrichtung des ersten Klemmteils ausgerichtet, weist aber eine in die Längsrichtung des ersten Klemmteils zeigende Komponente auf. Erfindungsgemäss weist ausserdem das zweite Klemmteil eine Wirkfläche auf, welche Wirkfläche zur Längsrichtung des zweiten Klemmteils geneigt ist. Somit ist der senkrecht auf die Wirkfläche des zweiten Klemmteils stehende Normalenvektor zwar nicht parallel zur Längsrichtung des zweiten Klemmteils ausgerichtet, weist aber eine in die Längsrichtung des zweiten Klemmteils zeigende Komponente auf.

Erfindungsgemäss weist das erste Klemmteil eine in die erste Richtung des ersten Klemmteils vorstehende erste Vorsprunganordnung zum Hintergreifen eines ersten des wenigstens einen Hinterschnitts der Nut in einem ersten der zwei zu verbindenden Elemente auf. Zudem weist das zweite Klemmteil eine in die erste Richtung des zweiten Klemmteils vorstehende erste Vorsprunganordnung zum Hintergreifen eines ersten des wenigstens einen Hinterschnitts der Nut in einem zweiten der zwei zu verbindenden Elemente auf. Die erste Vorsprunganordnung des ersten Klemmteils kann einen oder mehrere Vorsprünge umfassen. Genauso kann die erste Vorsprunganordnung des zweiten Klemmteils einen oder mehrere Vorsprünge umfassen. Ein solcher Vorsprung einer ersten Vorsprunganordnung kann entlang der Längsrichtung desjenigen Klemmteils, zu welchem die Vorsprunganordnung gehört, eine beliebige Länge aufweisen. So kann sich ein solcher Vorsprung in Längsrichtung des jeweiligen Klemmteils entlang des gesamten jeweiligen Klemmteils erstrecken. Genauso kann sich ein solcher Vorsprung aber auch in Längsrichtung des jeweiligen Klemmteils nur über einen Abschnitt des jeweiligen Klemmteils erstrecken.

Wenn die erste Vorsprunganordnung des ersten Klemmteils zwei oder mehr Vorsprünge umfasst, dann sind diese Vorsprünge jedoch vorzugsweise entlang der Längsrichtung des ersten Klemmteils nacheinander angeordnet, damit alle Vorsprünge der ersten Vorsprunganordnung des ersten Klemmteils dazu ausgebildet sind, den gleichen des wenigstens einen Hinterschnitts der Nut im ersten der zwei zu verbindenden Elemente zu hintergreifen, wenn die Kopplungseinrichtung in den durch die sich gegenüberliegenden Nuten gebildeten Raum eingeführt wird, um die zwei zu verbindenden Elemente zu verbinden.

Wenn die erste Vorsprunganordnung des zweiten Klemmteils zwei oder mehr Vorsprünge umfasst, dann sind diese Vorsprünge jedoch vorzugsweise entlang der Längsrichtung des zweiten Klemmteils nacheinander angeordnet, damit alle Vorsprünge der ersten Vorsprunganordnung des zweiten Klemmteils dazu ausgebildet sind, den gleichen des wenigstens einen Hinterschnitts der Nut im zweiten der zwei zu verbindenden Elemente zu hintergreifen, wenn die Kopplungseinrichtung in den durch die sich gegenüberliegenden Nuten gebildeten Raum eingeführt wird, um die zwei zu verbindenden Elemente zu verbinden.

Erfindungsgemäss werden, wenn durch die Spanneinrichtung die zwei Klemmteile entlang der Längsachse aufeinander zu gespannt werden, aufgrund des Zusammenwirkens der Wirkflächen das erste Klemmteil und das zweite Klemmteil relativ zueinander in eine Richtung quer zur Längsachse der Kopplungseinrichtung gedrückt und insbesondere zumindest geringfügig bewegt, sodass die am ersten Klemmteil angeordnete erste Vorsprunganordnung und die am zweiten Klemmteil angeordnete erste Vorsprunganordnung zueinander hin gedrückt werden. Somit wird aufgrund des Zusammenwirkens der Wirkflächen der zwei Klemmteile eines der zwei Klemmteile in eine Richtung gedrückt, welche Richtung eine in die vierte Richtung dieses einen Klemmteils zeigende Komponente aufweist, während das andere der zwei Klemmteile in eine Richtung gedrückt wird, welche Richtung eine in die zweite Richtung dieses anderen Klemmteils zeigende Komponente aufweist. Genauer gesagt wird das erste Klemmteil in eine Richtung gedrückt, welche Richtung eine in die vierte Richtung des ersten Klemmteils zeigende Komponente aufweist, weil der senkrecht auf die Wirkfläche des ersten Klemmteils stehende Normalenvektor eine in die zweite Richtung des ersten Klemmteils zeigende Komponente aufweist, während das zweite Klemmteil in eine Richtung gedrückt wird, welche Richtung eine in die zweite Richtung des ersten Klemmteils zeigende Komponente aufweist, weil der senkrecht auf die Wirkfläche des zweiten Klemmteils stehende Normalenvektor eine in die vierte Richtung des zweiten Klemmteils zeigende Komponente aufweist.

Indem aufgrund des Zusammenwirkens der Wirkflächen das erste Klemmteil und das zweite Klemmteil relativ zueinander in eine Richtung quer zur Längsachse der Kopplungseinrichtung gedrückt werden, sodass die am ersten Klemmteil angeordnete erste Vorsprunganordnung und die am zweiten Klemmteil angeordnete erste Vorsprunganordnung zueinander hin gedrückt werden, werden, wenn die zwei zu verbindenden Elemente mit ihren Nuten parallel zueinander ausgerichtet und mit ihren Nuten sich gegenüberliegend in Kontakt gebracht sind, die Kopplungseinrichtung im zusammengesetzten Zustand mit ihrer Längsachse parallel zu den Nuten ausgerichtet in den durch die sich gegenüberliegenden Nuten gebildeten Raum eingeführt ist sowie die am ersten Klemmteil angeordnete erste Vorsprunganordnung den ersten des wenigstens einen Hinterschnitts der Nut an einem ersten der zwei zu verbindenden Elemente hintergreift und die am zweiten Klemmteil angeordnete erste Vorsprunganordnung den ersten des wenigstens einen Hinterschnitts der Nut an einem zweiten der zwei zu verbindenden Elemente hintergreift, die zwei zu verbindenden Elemente durch zusammenklemmen der zwei zu verbindenden Elemente verbunden. D.h., wenn durch die Spanneinrichtung die zwei Klemmteile entlang der Längsachse aufeinander zu gespannt werden, werden aufgrund des Zusammenwirkens der Wirkflächen das erste Klemmteil und das zweite Klemmteil relativ zueinander in die Richtung quer zur Längsachse der I<opplungseinrichtung gedrückt, sodass die am ersten Klemmteil angeordnete erste Vorsprunganordnung und die am zweiten Klemmteil angeordnete erste Vorsprunganordnung zueinander hin gedrückt werden, insbesondere um, wenn die zwei zu verbindenden Elemente mit ihren Nuten parallel zueinander ausgerichtet und mit ihren Nuten sich gegenüberliegend in Kontakt gebracht sind, die Kopplungseinrichtung im zusammengesetzten Zustand mit ihrer Längsachse parallel zu den Nuten ausgerichtet in den durch die sich gegenüberliegenden Nuten gebildeten Raum eingeführt ist sowie die am ersten Klemmteil angeordnete erste Vorsprunganordnung den ersten des wenigstens einen Hinterschnitts der Nut an einem ersten der zwei zu verbindenden Elemente hintergreift und die am zweiten Klemmteil angeordnete erste Vorsprunganordnung den ersten des wenigstens einen Hinterschnitts der Nut an einem zweiten der zwei zu verbindenden Elemente hintergreift, die zwei zu verbindenden Elemente durch zusammenklemmen der zwei zu verbindenden Elemente zu verbinden.

Erfindungsgemäss weist der senkrecht auf die Wirkfläche des ersten Klemmteils stehende Normalenvektor sowohl eine in die erste Richtung des ersten Klemmteils zeigende Komponente als auch eine in die zweite Richtung des ersten Klemmteils zeigende Komponente auf, während der senkrecht auf die Wirkfläche des zweiten Klemmteils stehende Normalenvektor sowohl eine in die dritte Richtung des zweiten Klemmteils zeigende Komponente als auch eine in die vierte Richtung des zweiten Klemmteils zeigende Komponente aufweist. Da die Wirkfläche des ersten Klemmteils zudem zur Längsrichtung des ersten Klemmteils geneigt ist und die Wirkfläche des zweiten Klemmteils zudem zur Längsrichtung des zweiten Klemmteils geneigt ist, führt dies dazu, dass, wenn durch die Spanneinrichtung die zwei Klemmteile entlang der Längsachse aufeinander zu gespannt werden, aufgrund des Zusammenwirkens der Wirkflächen das erste Klemmteil relativ zum zweiten Klemmteil in eine Richtung gedrückt wird, welche Richtung sowohl eine in die dritte Richtung als auch eine in die vierte Richtung des ersten Klemmteils gerichtete Komponente aufweist, während das zweite Klemmteil relativ zum ersten Klemmteil in eine Richtung gedrückt wird, welche sowohl eine in die erste Richtung als auch eine in die zweite Richtung des zweiten Klemmteils gerichtete Komponente aufweist. Daher werden, wie bereits beschrieben, die am ersten Klemmteil angeordnete erste Vorsprunganordnung und die am zweiten Klemmteil angeordnete erste Vorsprunganordnung zueinander hin gedrückt. Genauer gesagt werden dadurch die am ersten Klemmteil angeordnete erste Vorsprunganordnung und die am zweiten Klemmteil angeordnete erste Vorsprunganordnung einer Annäherungsrichtung zueinander hin gedrückt, welche Annäherungsrichtung eine Komponente entlang einer durch die zweite Richtung und die vierte Richtung der zwei Klemmteile definierten Achse aufweist. Diese Annäherungsrichtung weist aber zugleich eine Komponente entlang einer durch die erste Richtung und die dritte Richtung der zwei Klemmteile definierten Achse auf. Entlang dieser durch die erste Richtung und die dritte Richtung der zwei Klemmteile definierten Achse werden das erste Klemmteil und das zweite Klemmteil auseinander gedrückt, sodass sich die zwei Klemmteile seitlich an den beiden Rändern der Nut im ersten zu verbindenden Element und an den Rändern der Nut im zweiten zu verbindenden Element absperren. Dies führt dazu, dass beim Verbinden der zwei zu verbindenden Elemente, wenn die Spanneinrichtung gespannt wird, die zwei zu verbindenden Elemente nicht nur zusammengeklemmt werden, sondern auch in eine Richtung quer zu den Nuten präzise und reproduzierbar zueinander positioniert werden.

Entsprechend ermöglicht die erfindungsgemässe Kopplungseinrichtung beim Verbinden der zwei zu verbindenden Elemente auf einfache und zuverlässige Art reproduzierbar eine korrekte Positionierung der zwei zu verbindenden Elemente in eine Richtung quer zu den Nuten in den zwei zu verbindenden Elementen. Hierzu reicht es aus, die zwei zu verbindenden Elemente mit ihren Nuten parallel zueinander ausgerichtet und mit ihren Nuten sich gegenüberliegend in Kontakt zu bringen, sodass ein durch die sich gegenüberliegenden Nuten gebildeter Raum ausreichend gross für das Einführen der Kopplungseinrichtung im zusammengesetzten Zustand der Kopplungseinrichtung ist, wenn die Kopplungseinrichtung mit der Längsachse der Kopplungseinrichtung parallel zu den Nuten ausgerichtet ist. Anschliessend können eine oder mehrere erfindungsgemässe I<opplungseinrichtungen im zusammengesetzten Zustand mit ihrer Längsachse parallel zu den Nuten ausgerichtet in den durch die sich gegenüberliegenden Nuten gebildeten Raum eingeführt und durch Spannen der Spanneinrichtung(en) der einen oder mehreren I<opplungseinrichtungen festgesetzt werden. Dabei erlaubt die erfindungsgemässe Kopplungseinrichtung viel Toleranz bezüglich der Präzision, mit welcher die zwei zu verbindenden Elemente mit ihren Nuten parallel zueinander ausgerichtet und mit ihren Nuten sich gegenüberliegend in Kontakt gebracht werden müssen, da es ausreicht, wenn der durch die sich gegenüberliegenden Nuten gebildete Raum ausreichend gross für das Einführen der Kopplungseinrichtung bzw. der I<opplungseinrichtungen ist. Sobald die eine oder mehreren erfindungsgemässen I<opplungseinrichtungen in diesen Raum eingeführt sind, müssen die zwei zu verbindenden Elemente nicht mehr länger zueinander positioniert gehalten werden und müssen auch gar nicht noch präziser relativ zueinander positioniert werden. Vielmehr reicht es aus, wenn nun die Spanneinrichtung(en) der einen oder mehreren eingesetzten I<opplungseinrichtungen gespannt wird bzw. werden, um die zwei zu verbindenden Elemente korrekt und präzise zueinander zu positionieren und miteinander zu verbinden.

Daher ist vorteilhafterweise zum Verbinden der zwei zu verbindenden Elemente, wenn die zwei zu verbindenden Elemente mit ihren Nuten parallel zueinander ausgerichtet und mit ihren Nuten sich gegenüberliegend in Kontakt gebracht sind, die Kopplungseinrichtung im zusammengesetzten Zustand mit ihrer Längsachse parallel zu den Nuten ausgerichtet in den durch die sich gegenüberliegenden Nuten gebildeten Raum einführbar, sodass die erste Vorsprunganordnung des ersten Klemmteils den ersten des wenigstens einen Hinterschnitts der Nut im ersten der zwei zu verbindenden Elemente hintergreift und die erste Vorsprunganordnung des zweiten Klemmteils den ersten des wenigstens einen Hinterschnitts der Nut im zweiten der zwei zu verbindenden Elemente hintergreift, wonach durch die Spanneinrichtung die zwei Klemmteile mit ihren Wirkflächen im Wesentlichen entlang der Längsachse aufeinander zu spannbar sind, damit aufgrund des Zusammenwirkens der Wirkflächen die zwei Klemmteile relativ zueinander in die Richtung quer zur Längsachse der Kopplungseinrichtung gedrückt werden, sodass die am ersten Klemmteil angeordnete erste Vorsprunganordnung und die am zweiten Klemmteil angeordnete erste Vorsprunganordnung aufeinander zu gedrückt werden und damit durch die am ersten Klemmteil angeordnete erste Vorsprunganordnung und die am zweiten Klemmteil angeordnete erste Vorsprunganordnung der erste des wenigstens einen Hinterschnitts der Nut im ersten der zwei zu verbindenden Elemente und der erste des wenigstens einen Hinterschnitts der Nut im zweiten der zwei zu verbindenden Elemente aufeinander zu gedrückt werden, um die zwei zu verbindenden Elemente durch zusammenklemmen der zwei zu verbindenden Elemente zu verbinden. Vorteilhafterweise ist dabei die Richtung quer zur Längsachse der I<opplungseinrichtung, in welche Richtung aufgrund des Zusammenwirkens der Wirkflächen die zwei Klemmteile relativ zueinander gedrückt werden, zudem so ausgerichtet, dass das erste Klemmteil und das zweite Klemmteil auch entlang einer durch die erste Richtung und die dritte Richtung der zwei Klemmteile definierten Achse auseinander gedrückt werden, sodass sich die zwei Klemmteile seitlich an den beiden Rändern der Nut im ersten zu verbindenden Element und an den Rändern der Nut im zweiten zu verbindenden Element absperren, um beim Verbinden der zwei zu verbindenden Elemente die zwei zu verbindenden Elemente in eine Richtung quer zu den Nuten in den zwei zu verbindenden Elementen korrekt zu positionieren.

Vorteilhafterweise beträgt beim ersten Klemmteil ein in einer durch die Längsrichtung und die erste Richtung aufgespannten Ebene gemessener Winkel zwischen der Wirkfläche und der ersten Richtung mindestens 30°. Weiter beträgt beim ersten Klemmteil vorteilhafterweise ein in einer durch die Längsrichtung und die zweite Richtung aufgespannten Ebene gemessener Winkel zwischen der Wirkfläche und der zweiten Richtung mindestens 30°. Ausserdem beträgt beim zweiten Klemmteil vorteilhafterweise ein in einer durch die Längsrichtung und die dritte Richtung aufgespannten Ebene gemessener Winkel zwischen der Wirkfläche und der dritten Richtung mindestens 30°. Zudem beträgt beim zweiten Klemmteil vorteilhafterweise ein in einer durch die Längsrichtung und die vierte Richtung aufgespannten Ebene gemessener Winkel zwischen der Wirkfläche und der vierten Richtung mindestens 30°. Dies hat den Vorteil, dass beim Verbinden der zwei zu verbindenden Elemente zum Spannen der Spanneinrichtung eine vergleichsweise geringe I<raft ausreicht, um die zwei zu verbindenden Elemente fest miteinander zu verbinden.

Vorteilhafterweise beträgt beim ersten Klemmteil der in der durch die Längsrichtung und die erste Richtung aufgespannten Ebene gemessene Winkel zwischen der Wirkfläche und der ersten Richtung höchstens 60°. Weiter beträgt beim ersten Klemmteil vorteilhafterweise der in der durch die Längsrichtung und die zweite Richtung aufgespannten Ebene gemessene Winkel zwischen der Wirkfläche und der zweiten Richtung höchstens 60°. Ausserdem beträgt beim zweiten Klemmteil vorteilhafterweise der in der durch die Längsrichtung und die dritte Richtung aufgespannten Ebene gemessene Winkel zwischen der Wirkfläche und der dritten Richtung höchstens 60°. Zudem beträgt beim zweiten Klemmteil der in der durch die Längsrichtung und die vierte Richtung aufgespannten Ebene gemessene Winkel zwischen der Wirkfläche und der vierten Richtung höchstens 60°. Dies hat den Vorteil, dass die Wirkfläche des ersten Klemmteils nicht allzu stark zur Längsrichtung des ersten Klemmteils geneigt ist und dass die Wirkfläche des zweiten Klemmteils nicht allzu stark zur Längsrichtung des zweiten Klemmteils geneigt ist, womit die zwei Klemmteile entlang ihren Längsrichtungen vergleichsweise kurz konstruiert werden können. Dies führt dazu, dass auch die gesamte Kopplungseinrichtung mit entlang ihrer Längsachse gemessen vergleichsweise kurz und entsprechend kompakt konstruiert werden kann.

Besonders bevorzugt beträgt beim ersten Klemmteil der in der durch die Längsrichtung und die erste Richtung aufgespannten Ebene gemessene Winkel zwischen der Wirkfläche und der ersten Richtung etwa 45°, während beim ersten Klemmteil der in der durch die Längsrichtung und die zweite Richtung aufgespannten Ebene gemessene Winkel zwischen der Wirkfläche und der zweiten Richtung etwa 45° beträgt, während beim zweiten Klemmteil der in der durch die Längsrichtung und die dritte Richtung aufgespannten Ebene gemessene Winkel zwischen der Wirkfläche und der dritten Richtung etwa 45° beträgt, und während beim zweiten Klemmteil der in der durch die Längsrichtung und die vierte Richtung aufgespannten Ebene gemessene Winkel zwischen der Wirkfläche und der vierten Richtung etwa 45° beträgt. Dies hat den Vorteil, dass die Kopplungseinrichtung entlang ihrer Längsachse gemessen kurz konstruiert werden kann und gleichzeitig beim Verbinden der zwei zu verbindenden Elemente eine geringe I<raft zum Spannen der Spanneinrichtung ausreicht, um die zwei zu verbindenden Elemente fest miteinander zu verbinden.

Alternativ zu diesen Variante besteht auch die Möglichkeit, dass beim ersten Klemmteil der in der durch die Längsrichtung und die erste Richtung aufgespannten Ebene gemessene Winkel zwischen der Wirkfläche und der ersten Richtung weniger als 30° oder mehr als 60° beträgt. Genauso besteht die Möglichkeit, dass beim ersten Klemmteil der in der durch die Längsrichtung und die zweite Richtung aufgespannten Ebene gemessene Winkel zwischen der Wirkfläche und der zweiten Richtung weniger als 30° oder mehr als 60° beträgt. Genauso besteht auch die Möglichkeit, dass beim zweiten Klemmteil der in der durch die Längsrichtung und die dritte Richtung aufgespannten Ebene gemessene Winkel zwischen der Wirkfläche und der dritten Richtung weniger als 30° oder mehr als 60° beträgt. Genauso besteht auch die Möglichkeit, dass beim zweiten Klemmteil der in der durch die Längsrichtung und die vierte Richtung aufgespannten Ebene gemessene Winkel zwischen der Wirkfläche und der vierten Richtung weniger als 30° oder mehr als 60° beträgt.

Bevorzugt ist die erste Vorsprunganordnung des ersten Klemmteils auf einer in die zweite Richtung des ersten Klemmteils liegenden Hälfte des ersten Klemmteils angeordnet und ist die erste Vorsprunganordnung des zweiten Klemmteils auf einer in die vierte Richtung des zweiten Klemmteils liegenden Hälfte des zweiten Klemmteils angeordnet. Dies führt dazu, dass die zwei Klemmteile im zusammengesetzten Zustand der I<opplungseinrichtung, wenn die Spanneinrichtung nicht gespannt ist und die zwei Klemmteile somit nicht entlang der Längsachse aufeinander zu gespannt sind, mit ihren Wirkflächen im Wesentlichen vollständig aufeinanderliegend angeordnet werden können, während sich die erste Vorsprunganordnung des ersten Klemmteils von der ersten Vorsprunganordnung des zweiten Klemmteils aus gesehen in der zweiten Richtung des zweiten Klemmteils befindet, während sich die erste Vorsprunganordnung des zweiten Klemmteils von der ersten Vorsprunganordnung des ersten Klemmteils aus gesehen in der vierten Richtung des ersten Klemmteils befindet. Wenn anschliessend die Spanneinrichtung gespannt wird, um die zwei Klemmteile somit entlang der Längsachse aufeinander zu spannen und aufgrund des Zusammenwirkens der Wirkflächen das erste Klemmteil und das zweite Klemmteil relativ zueinander in eine Richtung quer zur Längsachse der Kopplungseinrichtung zu drücken, werden die am ersten Klemmteil angeordnete erste Vorsprunganordnung und die am zweiten Klemmteil angeordnete erste Vorsprunganordnung zueinander hin gedrückt. Da dabei zuerst die zwei Klemmteile im entspannten Zustand der Spanneinrichtung wie erläutert mit ihren Wirkflächen im Wesentlichen vollständig aufeinanderliegend angeordnet werden können, hat diese Anordnung der ersten Vorsprunganordnungen am jeweiligen der zwei Klemmteile den Vorteil, dass die zwei Klemmteile sehr stabil mit ihren Wirkflächen aneinander abgestützt werden können, sodass die Kopplungseinrichtung sehr zuverlässig und stabil funktioniert und somit ein sehr zuverlässiges und stabiles Verbinden von zwei zu verbindenden Elementen mit den entsprechenden Nuten ermöglicht.

Vorteilhafterweise bildet die erste Vorsprunganordnung des ersten Klemmteils in Längsrichtung des ersten Klemmteils betrachtet in einem Bereich eines der Wirkfläche des ersten Klemmteils gegenüberliegenden, ersten Endes des ersten Klemmteils einen Vorsprung zum Hintergreifen des ersten des wenigstens einen Hinterschnitts der Nut im ersten der zwei zu verbindenden Elemente. Weiter bildet vorteilhafterweise die erste Vorsprunganordnung des zweiten Klemmteils in Längsrichtung des zweiten Klemmteils betrachtet in einem Bereich eines der Wirkfläche des zweiten Klemmteils gegenüberliegenden, ersten Endes des zweiten Klemmteils einen Vorsprung zum Hintergreifen des ersten des wenigstens einen Hinterschnitts der Nut im zweiten der zwei zu verbindenden Elemente. Da bei den zwei Klemmteilen jeweils das erste Ende des jeweiligen Klemmteils in Längsrichtung des jeweiligen Klemmteils betrachtet der Wirkfläche des jeweiligen Klemmteils gegenüberliegt, sind im zusammengesetzten Zustand der Kopplungseinrichtung das erste Ende des ersten Klemmteils und das zweite Ende des zweiten Klemmteils voneinander abgewandt. Daher wird der Vorteil erreicht, dass die Kopplungseinrichtung ein stabiles und damit zuverlässiges Verbinden der zwei zu verbindenden Elemente ermöglicht.

Unabhängig davon, ob die ersten Vorsprunganordnungen der zwei Klemmteile jeweils im Bereich des ersten Endes des jeweiligen Klemmteils einen Vorsprung bilden oder nicht, bildet die erste Vorsprunganordnung des ersten Klemmteils vorteilhafterweise im Bereich der Wirkfläche des ersten Klemmteils einen Vorsprung zum Hintergreifen des ersten des wenigstens einen Hinterschnitts der Nut im ersten der zwei zu verbindenden Elemente, während die erste Vorsprunganordnung des zweiten Klemmteils vorteilhafterweise im Bereich der Wirkfläche des zweiten Klemmteils einen Vorsprung zum Hintergreifen des ersten des wenigstens einen Hinterschnitts der Nut im zweiten der zwei zu verbindenden Elemente bildet. Dies hat den Vorteil, dass beim Verbinden der zwei zu verbindenden Elemente von den zwei Klemmteilen vergleichsweise grosse I<räfte aufgenommen werden können, da die Vorsprünge und die Wirkflächen sehr nahe beieinander angeordnet sind.

Falls zudem die ersten Vorsprunganordnungen der zwei Klemmteile jeweils im Bereich des ersten Endes des jeweiligen Klemmteils einen Vorsprung bilden, wird zudem der Vorteil erreicht, dass die Kopplungseinrichtung ein besonders stabiles und damit zuverlässiges Verbinden der zwei zu verbindenden Elemente ermöglicht. Hierzu ist unerheblich, ob der im Bereich des ersten Endes des jeweiligen Klemmteils angeordnete Vorsprung der ersten Vorsprunganordnung und der im Bereich der Wirkfläche des jeweiligen Klemmteils angeordnete Vorsprung der ersten Vorsprunganordnung als ein kontinuierlicher, sich entlang der Längsrichtung des jeweiligen Klemmteils erstreckender Vorsprung ausgebildet ist, oder ob der im Bereich des ersten Endes des jeweiligen Klemmteils angeordnete Vorsprung der ersten Vorsprunganordnung und der im Bereich der Wirkfläche des jeweiligen Klemmteils angeordnete Vorsprung der ersten Vorsprunganordnung als zwei separate Vorsprünge ausgebildet sind. Im ersten Fall umfasst die jeweilige erste Vorsprunganordnung nur einen Vorsprung, wohingegen im zweiten Fall die jeweilige erste Vorsprunganordnung mindestens zwei Vorsprünge aufweist.

Erfindungsgemäß ist die Kopplungseinrichtung geeignet zum Verbinden von zwei zu verbindenden Elementen, welche zwei Elemente je eine beidseitig mit je mindestens einem Hinterschnitt und somit mit mindestens zwei Hinterschnitten hinterschnittene Nut aufweisen. Dabei weist das erste Klemmteil vorteilhafterweise eine in die dritte Richtung des ersten Klemmteils vorstehende zweite Vorsprunganordnung auf und weist das zweite Klemmteil eine in die dritte Richtung des zweiten Klemmteils vorstehende zweite Vorsprunganordnung auf. In einer ersten Variante dient dabei die zweite Vorsprunganordnung des ersten Klemmteils zum Hintergreifen eines zweiten der mindestens zwei Hinterschnitte der Nut im ersten der zwei zu verbindenden Elemente, während die zweite Vorsprunganordnung des zweiten Klemmteils zum Hintergreifen eines zweiten der mindestens zwei Hinterschnitte der Nut im zweiten der zwei zu verbindenden Elemente dient. In einer alternativ zur ersten Variante stehenden zweiten Variante hingegen dient die zweite Vorsprunganordnung des ersten Klemmteils zum Hintergreifen eines zweiten der mindestens zwei Hinterschnitte der Nut im zweiten der zwei zu verbindenden Elemente, während die zweite Vorsprunganordnung des zweiten Klemmteils zum Hintergreifen eines zweiten der mindestens zwei Hinterschnitte der Nut im ersten der zwei zu verbindenden Elemente dient. In diesen beiden Varianten wird der Vorteil erreicht, dass die Kopplungseinrichtung ein besonders zuverlässiges Verbinden der zwei zu verbindenden Elemente mit den entsprechenden Nuten ermöglicht.

Vorteilhafterweise bildet die zweite Vorsprunganordnung des ersten Klemmteils in Längsrichtung des ersten Klemmteils betrachtet im Bereich des der Wirkfläche des ersten Klemmteils gegenüberliegenden, ersten Endes des ersten Klemmteils einen Vorsprung zum Hintergreifen des zweiten der mindestens zwei Hinterschnitte der Nut im ersten der zwei zu verbindenden Elemente bzw. zum Hintergreifen des zweiten der mindestens zwei Hinterschnitte der Nut im zweiten der zwei zu verbindenden Elemente. Weiter bildet vorteilhafterweise die zweite Vorsprunganordnung des zweiten Klemmteils in Längsrichtung des zweiten Klemmteils betrachtet im Bereich des der Wirkfläche des zweiten Klemmteils gegenüberliegenden, ersten Endes des zweiten Klemmteils einen Vorsprung zum Hintergreifen des zweiten der mindestens zwei Hinterschnitte der Nut im zweiten der zwei zu verbindenden Elemente bzw. zum Hintergreifen des zweiten der mindestens zwei Hinterschnitte der Nut im ersten der zwei zu verbindenden Elemente. Da bei den zwei Klemmteilen jeweils das erste Ende des jeweiligen Klemmteils in Längsrichtung des jeweiligen Klemmteils betrachtet der Wirkfläche des jeweiligen Klemmteils gegenüberliegt, sind im zusammengesetzten Zustand der I<opplungseinrichtung das erste Ende des ersten Klemmteils und das zweite Ende des zweiten Klemmteils voneinander abgewandt. Daher wird der Vorteil erreicht, dass die I<opplungseinrichtung ein stabiles und damit zuverlässiges Verbinden der zwei zu verbindenden Elemente ermöglicht.

Unabhängig davon, ob die zweiten Vorsprunganordnungen der zwei Klemmteile jeweils im Bereich des ersten Endes des jeweiligen Klemmteils einen Vorsprung bilden oder nicht, bildet die zweite Vorsprunganordnung des ersten Klemmteils vorteilhafterweise im Bereich der Wirkfläche des ersten Klemmteils einen Vorsprung zum Hintergreifen des zweiten der mindestens zwei Hinterschnitte der Nut im ersten der zwei zu verbindenden Elemente bzw. zum Hintergreifen des zweiten der mindestens zwei Hinterschnitte der Nut im zweiten der zwei zu verbindenden Elemente, während die zweite Vorsprunganordnung des zweiten Klemmteils vorteilhafterweise im Bereich der Wirkfläche des zweiten Klemmteils einen Vorsprung zum Hintergreifen des zweiten des wenigstens einen Hinterschnitts der Nut im zweiten der zwei zu verbindenden Elemente bzw. zum Hintergreifen des zweiten des wenigstens einen Hinterschnitts der Nut im ersten der zwei zu verbindenden Elemente bildet. Dies hat den Vorteil, dass beim Verbinden der zwei zu verbindenden Elemente von den zwei Klemmteilen vergleichsweise grosse I<räfte aufgenommen werden können, da die Vorsprünge und die Wirkflächen sehr nahe beieinander angeordnet sind.

Falls zudem die zweiten Vorsprunganordnungen der zwei Klemmteile jeweils im Bereich des ersten Endes des jeweiligen Klemmteils einen Vorsprung bilden, wird zudem der Vorteil erreicht, dass die Kopplungseinrichtung ein besonders stabiles und damit zuverlässiges Verbinden der zwei zu verbindenden Elemente ermöglicht. Hierzu ist unerheblich, ob der im Bereich des ersten Endes des jeweiligen Klemmteils angeordnete Vorsprung der zweiten Vorsprunganordnung und der im Bereich der Wirkfläche des jeweiligen Klemmteils angeordnete Vorsprung der zweiten Vorsprunganordnung als ein kontinuierlicher, sich entlang der Längsrichtung des jeweiligen Klemmteils erstreckender Vorsprung ausgebildet ist, oder ob der im Bereich des ersten Endes des jeweiligen Klemmteils angeordnete Vorsprung der zweiten Vorsprunganordnung und der im Bereich der Wirkfläche des jeweiligen Klemmteils angeordnete Vorsprung der zweiten Vorsprunganordnung als zwei separate Vorsprünge ausgebildet sind. Im ersten Fall umfasst die jeweilige zweite Vorsprunganordnung nur einen Vorsprung, wohingegen im zweiten Fall die jeweilige zweite Vorsprunganordnung mindestens zwei Vorsprünge aufweist.

In der vorgenannten ersten Variante, in welcher die zweite Vorsprunganordnung des ersten Klemmteils zum Hintergreifen des zweiten der mindestens zwei Hinterschnitte der Nut im ersten der zwei zu verbindenden Elemente dient, während die zweite Vorsprunganordnung des zweiten Klemmteils zum Hintergreifen des zweiten der mindestens zwei Hinterschnitte der Nut im zweiten der zwei zu verbindenden Elemente dient, ist die zweite Vorsprunganordnung des ersten Klemmteils vorteilhafterweise ausgehend von der ersten Vorsprunganordnung des ersten Klemmteils in die dritte Richtung des ersten Klemmteils am ersten Klemmteil angeordnet und ist die zweite Vorsprunganordnung des zweiten Klemmteils vorteilhafterweise ausgehend von der ersten Vorsprunganordnung des zweiten Klemmteils in die dritte Richtung des zweiten Klemmteils am zweiten Klemmteil angeordnet. Dies führt dazu, dass im zusammengesetzten Zustand der I<opplungseinrichtung, wenn durch die Spanneinrichtung die zwei Klemmteile entlang der Längsachse aufeinander zu gespannt werden, aufgrund des Zusammenwirkens der Wirkflächen das erste Klemmteil und das zweite Klemmteil relativ zueinander in eine Richtung quer zur Längsachse der Kopplungseinrichtung gedrückt werden, sodass nicht nur die am ersten Klemmteil angeordnete erste Vorsprunganordnung und die am zweiten Klemmteil angeordnete erste Vorsprunganordnung zueinander hin gedrückt werden, sondern sodass auch die am ersten Klemmteil angeordnete zweite Vorsprunganordnung und die am zweiten Klemmteil angeordnete zweite Vorsprunganordnung zueinander hin gedrückt werden. Dies hat den Vorteil, dass mit der ersten und der zweiten Vorsprunganordnung des ersten Klemmteils das erste der zwei zu verbindenden Elemente beidseitig der Nut am jeweiligen Hinterschnitt hintergriffen werden kann, während mit der ersten und der zweiten Vorsprunganordnung des zweiten Klemmteils des zweiten der zwei zu verbindenden Elemente beidseitig der Nut am jeweiligen Hinterschnitt hintergriffen werden kann. Entsprechend können dadurch die zwei zu verbindenden Elemente durch die Kopplungseinrichtung gleichmässig zueinander hin gezogen werden, wenn durch die Spanneinrichtung die zwei Klemmteile entlang der Längsachse aufeinander zu gespannt werden. Entsprechend wird dadurch mit der Kopplungseinrichtung ein sehr gleichmässiges und damit stabiles Verbinden der zwei zu verbindenden Elemente ermöglicht.

In dieser Variante können die zwei Klemmteile beispielsweise mit einem senkrecht zur Längsrichtung des jeweiligen Klemmteils verlaufenden, T-förmigen oder t-förmigen Querschnitt ausgebildet werden.

Wenn die zweite Vorsprunganordnung des ersten Klemmteils ausgehend von der ersten Vorsprunganordnung des ersten Klemmteils in die dritte Richtung des ersten Klemmteils am ersten Klemmteil angeordnet ist und die zweite Vorsprunganordnung des zweiten Klemmteils ausgehend von der ersten Vorsprunganordnung des zweiten Klemmteils in die dritte Richtung des zweiten Klemmteils am zweiten Klemmteil angeordnet ist, so ist vorteilhafterweise die zweite Vorsprunganordnung des ersten Klemmteils auf der in die zweite Richtung des ersten Klemmteils liegenden Hälfte des ersten Klemmteils angeordnet und ist die zweite Vorsprunganordnung des zweiten Klemmteils auf der in die vierte Richtung des zweiten Klemmteils liegenden Hälfte des zweiten Klemmteils angeordnet. Dies führt dazu, dass die zwei Klemmteile im zusammengesetzten Zustand der I<opplungseinrichtung, wenn die Spanneinrichtung nicht gespannt ist und die zwei Klemmteile somit nicht entlang der Längsachse aufeinander zu gespannt sind, mit ihren Wirkflächen im Wesentlichen vollständig aufeinanderliegend angeordnet werden können, während sich die zweite Vorsprunganordnung des ersten Klemmteils von der zweiten Vorsprunganordnung des zweiten Klemmteils aus gesehen in der zweiten Richtung des zweiten Klemmteils befindet, während sich die zweite Vorsprunganordnung des zweiten Klemmteils von der zweiten Vorsprunganordnung des ersten Klemmteils aus gesehen in der vierten Richtung des ersten Klemmteils befindet. Wenn anschliessend die Spanneinrichtung gespannt wird, um die zwei Klemmteile somit entlang der Längsachse aufeinander zu spannen und aufgrund des Zusammenwirkens der Wirkflächen das erste Klemmteil und das zweite Klemmteil relativ zueinander in eine Richtung quer zur Längsachse der I<opplungseinrichtung zu drücken, werden die am ersten Klemmteil angeordnete zweite Vorsprunganordnung und die am zweiten Klemmteil angeordnete zweite Vorsprunganordnung zueinander hin gedrückt. Da dabei zuerst die zwei Klemmteile im entspannten Zustand der Spanneinrichtung wie erläutert mit ihren Wirkflächen im Wesentlichen vollständig aufeinanderliegend angeordnet werden können, hat diese Anordnung der zweiten Vorsprunganordnungen am jeweiligen der zwei Klemmteile den Vorteil, dass die zwei Klemmteile sehr stabil mit ihren Wirkflächen aneinander abgestützt werden können, sodass die Kopplungseinrichtung sehr zuverlässig und stabil funktioniert und somit ein sehr zuverlässiges und stabiles Verbinden von zwei zu verbindenden Elementen mit den entsprechenden Nuten ermöglicht. Dieser Vorteil ist ganz besonders ausgeprägt, wenn sowohl die erste Vorsprunganordnung als auch die zweite Vorsprunganordnung des ersten Klemmteils auf der in die zweite Richtung des ersten Klemmteils liegenden Hälfte des ersten Klemmteils angeordnet sind und wenn sowohl die erste Vorsprunganordnung als auch die zweite Vorsprunganordnung des zweiten Klemmteils auf der in die vierte Richtung des zweiten Klemmteils liegenden Hälfte des zweiten Klemmteils angeordnet sind.

In der vorgenannten zweiten Variante, in welcher die zweite Vorsprunganordnung des ersten Klemmteils zum Hintergreifen des zweiten der mindestens zwei Hinterschnitte der Nut im zweiten der zwei zu verbindenden Elemente dient, während die zweite Vorsprunganordnung des zweiten Klemmteils zum Hintergreifen des zweiten der mindestens zwei Hinterschnitte der Nut im ersten der zwei zu verbindenden Elemente dient, ist vorteilhafterweise die zweite Vorsprunganordnung des ersten Klemmteils ausgehend von der ersten Vorsprunganordnung des ersten Klemmteils in eine fünfte Richtung des ersten Klemmteils am ersten Klemmteil angeordnet, welche fünfte Richtung des ersten Klemmteils eine Komponente in die vierte Richtung des ersten Klemmteils und eine Komponente in die dritte Richtung des ersten Klemmteils aufweist, wobei zudem vorteilhafterweise die zweite Vorsprunganordnung des zweiten Klemmteils ausgehend von der ersten Vorsprunganordnung des zweiten Klemmteils in eine fünfte Richtung des zweiten Klemmteils am zweiten Klemmteil angeordnet ist, welche fünfte Richtung des zweiten Klemmteils eine Komponente in die zweite Richtung des zweiten Klemmteils und eine Komponente in die dritte Richtung des zweiten Klemmteils aufweist.

Dies führt dazu, dass, wenn die zwei zu verbindenden Elemente mit ihren Nuten parallel zueinander ausgerichtet und mit ihren Nuten sich gegenüberliegend in Kontakt gebracht sind, die Kopplungseinrichtung im zusammengesetzten Zustand mit ihrer Längsachse parallel zu den Nuten ausgerichtet in den durch die sich gegenüberliegenden Nuten gebildeten Raum eingeführt ist und durch die Spanneinrichtung die zwei Klemmteile entlang der Längsachse aufeinander zu gespannt werden, aufgrund des Zusammenwirkens der Wirkflächen das erste Klemmteil und das zweite Klemmteil relativ zueinander in eine Richtung quer zur Längsachse der Kopplungseinrichtung gedrückt werden, sodass die am ersten Klemmteil angeordnete erste Vorsprunganordnung und die am zweiten Klemmteil angeordnete erste Vorsprunganordnung zueinander hin gedrückt werden und an den Hinterschnitten der Nuten anstehen, welche Hinterschnitte die am ersten Klemmteil angeordnete erste Vorsprunganordnung und die am zweiten Klemmteil angeordnete erste Vorsprunganordnung hintergreifen. Sobald dabei die am ersten Klemmteil angeordnete erste Vorsprunganordnung und die am zweiten Klemmteil angeordnete erste Vorsprunganordnung am jeweiligen Hinterschnitt anstehen, beginnen sich beim weiteren Spannen der Spanneinrichtung der erste Klemmteil und der zweite Klemmteil um ihre Längsrichtungen relativ zueinander zu verdrehen, bis auch die am ersten Klemmteil angeordnete zweite Vorsprunganordnung und die am zweiten Klemmteil angeordnete zweite Vorsprunganordnung an den Hinterschnitten anstehen, welche Hinterschnitte die am ersten Klemmteil angeordnete zweite Vorsprunganordnung und die am zweiten Klemmteil angeordnete zweite Vorsprunganordnung hintergreifen. Somit werden beim Spannen der Spanneinrichtung aufgrund des Zusammenwirkens der Wirkflächen das erste Klemmteil und das zweite Klemmteil relativ zueinander in die Richtung quer zur Längsachse der Kopplungseinrichtung gedrückt und zudem werden, aufgrund des Anstehens der ersten Vorsprunganordnungen an den jeweiligen von ihnen hintergriffenen Hinterschnitten, das erste Klemmteil und das zweite Klemmteil um ihre Längsrichtungen relativ zueinander verdreht. Dieses Verdrehen führt dazu, dass letztlich nicht nur die am ersten Klemmteil angeordnete erste Vorsprunganordnung und die am zweiten Klemmteil angeordnete erste Vorsprunganordnung zueinander hin gedrückt werden, sondern dass letztlich auch die am ersten Klemmteil angeordnete zweite Vorsprunganordnung und die am zweiten Klemmteil angeordnete zweite Vorsprunganordnung zueinander hin gedrückt werden. Entsprechend können dadurch die zwei zu verbindenden Elemente durch die Kopplungseinrichtung gleichmässig zueinander hin gezogen werden, wenn durch die Spanneinrichtung die zwei Klemmteile entlang der Längsachse aufeinander zu gespannt werden. Entsprechend wird dadurch mit der Kopplungseinrichtung ein sehr gleichmässiges und damit stabiles Verbinden der zwei zu verbindenden Elemente ermöglicht. Zusätzlich dazu wird aber auch der Vorteil erreicht, dass eine Grösse und Dimensionierung der Kopplungseinrichtung weniger genau an die Grösse der beidseitig mit Hinterschnitten hinterschnittenen Nuten angepasst sein muss, um die zwei zu verbindenden Elemente optimal verbinden zu können. Dadurch kann die Kopplungseinrichtung vielfältiger eingesetzt werden.

Wenn die zweite Vorsprunganordnung des ersten Klemmteils ausgehend von der ersten Vorsprunganordnung des ersten Klemmteils in die fünfte Richtung des ersten Klemmteils am ersten Klemmteil angeordnet ist, welche fünfte Richtung des ersten Klemmteils eine Komponente in die vierte Richtung des ersten Klemmteils und eine Komponente in die dritte Richtung des ersten Klemmteils aufweist, und zudem die zweite Vorsprunganordnung des zweiten Klemmteils ausgehend von der ersten Vorsprunganordnung des zweiten Klemmteils in eine fünfte Richtung des zweiten Klemmteils am zweiten Klemmteil angeordnet ist, welche fünfte Richtung des zweiten Klemmteils eine Komponente in die zweite Richtung des zweiten Klemmteils und eine Komponente in die dritte Richtung des zweiten Klemmteils aufweist, so ist vorteilhafterweise die zweite Vorsprunganordnung des ersten Klemmteils auf einer in die vierte Richtung des ersten Klemmteils liegenden Hälfte des ersten Klemmteils angeordnet und die zweite Vorsprunganordnung des zweiten Klemmteils auf einer in die zweite Richtung des zweiten Klemmteils liegenden Hälfte des zweiten Klemmteils angeordnet. Dies hat den Vorteil, dass die Kopplungseinrichtung vergleichsweise kompakt und vielfältig einsetzbar konstruiert werden kann.

Bevorzugt ist die in die vierte Richtung des ersten Klemmteils gerichtete Komponente der fünften Richtung des ersten Klemmteils etwa gleich gross wie die in die dritte Richtung des ersten Klemmteils gerichtete Komponente der fünften Richtung des ersten Klemmteils, während die in die zweite Richtung des zweiten Klemmteils gerichtete Komponente der fünften Richtung des zweiten Klemmteils etwa gleich gross wie die in die dritte Richtung des zweiten Klemmteils gerichtete Komponente der fünften Richtung des zweiten Klemmteils ist. Dadurch können die zwei Klemmteile auf einfache Art und Weise derart konstruiert werden, dass ein Bereich einer Projektion der Wirkfläche des jeweiligen Klemmteils auf eine zur Längsrichtung des jeweiligen Klemmteils senkrecht stehende Ebene, welcher Bereich zwischen der ersten Vorsprunganordnung und der zweiten Vorsprunganordnung des jeweiligen Klemmteils liegt, einen im Wesentlichen quadratischen Querschnitt aufweist. Dies erlaubt es, die Wirkflächen so zu formen, dass die zwei Klemmteile sehr stabil mit ihren Wirkflächen aneinander abgestützt werden können, sodass die Kopplungseinrichtung sehr zuverlässig und stabil funktioniert und somit ein sehr zuverlässiges und stabiles Verbinden von zwei zu verbindenden Elementen mit den entsprechenden Nuten ermöglicht. Dieser Vorteil ist ganz besonders ausgeprägt, wenn zudem die erste Vorsprunganordnung des ersten Klemmteils auf der in die zweite Richtung des ersten Klemmteils liegenden Hälfte des ersten Klemmteils angeordnet ist, während die zweite Vorsprunganordnung des ersten Klemmteils auf der in die vierte Richtung des ersten Klemmteils liegenden Hälfte des ersten Klemmteils angeordnet ist, und wenn zudem die erste Vorsprunganordnung des zweiten Klemmteils auf der in die vierte Richtung des zweiten Klemmteils liegenden Hälfte des zweiten Klemmteils angeordnet ist, während die zweite Vorsprunganordnung des zweiten Klemmteils auf der in die zweite Richtung des zweiten Klemmteils liegenden Hälfte des zweiten Klemmteils angeordnet ist.

Alternativ zu diesen Varianten besteht auch die Möglichkeit, dass nur eines der zwei Klemmteile eine zweite Vorsprunganordnung aufweist oder dass keines der zwei Klemmteile eine zweite Vorsprunganordnung aufweist.

Eine Kopplungseinrichtung gemäss der vorgenannten zweiten Variante, in welcher die zweite Vorsprunganordnung des ersten Klemmteils zum Hintergreifen des zweiten der mindestens zwei Hinterschnitte der Nut im zweiten der zwei zu verbindenden Elemente dient, während die zweite Vorsprunganordnung des zweiten Klemmteils zum Hintergreifen des zweiten der mindestens zwei Hinterschnitte der Nut im ersten der zwei zu verbindenden Elemente dient, wobei die zweite Vorsprunganordnung des ersten Klemmteils ausgehend von der ersten Vorsprunganordnung des ersten Klemmteils in eine fünfte Richtung des ersten Klemmteils am ersten Klemmteil angeordnet ist, welche fünfte Richtung des ersten Klemmteils eine Komponente in die vierte Richtung des ersten Klemmteils und eine Komponente in die dritte Richtung des ersten Klemmteils aufweist, wobei zudem die zweite Vorsprunganordnung des zweiten Klemmteils ausgehend von der ersten Vorsprunganordnung des zweiten Klemmteils in eine fünfte Richtung des zweiten Klemmteils am zweiten Klemmteil angeordnet ist, welche fünfte Richtung des zweiten Klemmteils eine Komponente in die zweite Richtung des zweiten Klemmteils und eine Komponente in die dritte Richtung des zweiten Klemmteils aufweist, kann auch ohne die Merkmale, wonach der senkrecht auf die Wirkfläche des ersten Klemmteils stehende Normalenvektor sowohl eine in die erste Richtung des ersten Klemmteils zeigende Komponente als auch eine in die zweite Richtung des ersten Klemmteils zeigende Komponente aufweist, und der senkrecht auf die Wirkfläche des zweiten Klemmteils stehende Normalenvektor sowohl eine in die dritte Richtung des zweiten Klemmteils zeigende Komponente als auch eine in die vierte Richtung des zweiten Klemmteils zeigende Komponente aufweist, ausgeführt werden. Eine solche, zu einer zweite Erfindung gehörende Kopplungseinrichtung weist die folgenden Merkmale auf: Kopplungseinrichtung zum Verbinden von zwei zu verbindenden Elementen, welche zwei Elemente je mit einer beidseitig je mit mindestens einem Hinterschnitt hinterschnittene und somit mit mindestens zwei Hinterschnitten hinterschnittene Nut aufweisen, wobei die I<opplungseinrichtung ein erstes Klemmteil und ein zweites Klemmteil und somit zwei Klemmteile umfasst. Dabei ist zu beiden der zwei Klemmteilen je eine Längsrichtung, eine senkrecht zur Längsrichtung ausgerichtete erste Richtung, eine sowohl senkrecht zur Längsrichtung als auch senkrecht zur ersten Richtung ausgerichtete zweite Richtung, eine zur ersten Richtung entgegengesetzt ausgerichtete dritte Richtung und eine zur zweiten Richtung entgegengesetzt ausgerichtete vierte Richtung definiert ist. Das erste Klemmteil weist eine Wirkfläche auf, welche Wirkfläche zur Längsrichtung des ersten Klemmteils geneigt ist. Ein senkrecht auf die Wirkfläche des ersten Klemmteils stehender Normalenvektor weist eine in die zweite Richtung des ersten Klemmteils zeigende Komponente auf. Das zweite Klemmteil weist eine Wirkfläche auf, welche Wirkfläche zur Längsrichtung des zweiten Klemmteils geneigt ist. Dabei weist ein senkrecht auf die Wirkfläche des zweiten Klemmteils stehender Normalenvektor eine in die vierte Richtung des zweiten Klemmteils zeigende Komponente auf. Das erste Klemmteil weist eine in die erste Richtung des ersten Klemmteils vorstehende erste Vorsprunganordnung zum Hintergreifen eines ersten der mindestens zwei Hinterschnitte der Nut in einem ersten der zwei zu verbindenden Elemente auf und das zweite Klemmteil weist eine in die erste Richtung des zweiten Klemmteils vorstehende erste Vorsprunganordnung zum Hintergreifen eines ersten der mindestens zwei Hinterschnitte der Nut in einem zweiten der zwei zu verbindenden Elemente auf. Diese Kopplungseinrichtung umfasst ausserdem eine Spanneinrichtung zum aufeinander zu Spannen der zwei Klemmteile im Wesentlichen entlang einer Längsachse der I<opplungs-einrichtung, wobei in einem zusammengesetzten Zustand der I<opplungseinrichtung die zwei Klemmteile je mit ihrer Längsrichtung im Wesentlichen entlang der Längsachse der Kopplungseinrichtung ausgerichtet sind, während die erste Richtung des ersten Klemmteils und die erste Richtung des zweiten Klemmteils im Wesentlichen parallel zueinander ausgerichtet sind und die zweite Richtung des ersten Klemmteils und die zweite Richtung des zweiten Klemmteils im Wesentlichen parallel zueinander ausgerichtet sind, und die zwei Klemmteile je mit ihren Wirkflächen einander zugewandt hintereinander entlang der Längsachse angeordnet und durch die Spanneinrichtung entlang der Längsachse aufeinander zu spannbar oder aufeinander zu gespannt sind, wobei, wenn durch die Spanneinrichtung die zwei Klemmteile entlang der Längsachse aufeinander zu gespannt werden, aufgrund des Zusammenwirkens der Wirkflächen das erste Klemmteil und das zweite Klemmteil relativ zueinander in eine Richtung quer zur Längsachse der Kopplungseinrichtung gedrückt werden, sodass die am ersten Klemmteil angeordnete erste Vorsprunganordnung und die am zweiten Klemmteil angeordnete erste Vorsprunganordnung zueinander hin gedrückt werden. Dabei weist das erste Klemmteil eine zweite Vorsprunganordnung zum Hintergreifen eines zweiten der mindestens zwei Hinterschnitte der Nut im zweiten der zwei zu verbindenden Elemente auf, während das zweite Klemmteil eine zweite Vorsprunganordnung zum Hintergreifen des zweiten der mindestens zwei Hinterschnitte der Nut im ersten der zwei zu verbindenden Elemente aufweist. Die zweite Vorsprunganordnung des ersten Klemmteils ist ausgehend von der ersten Vorsprunganordnung des ersten Klemmteils in eine fünfte Richtung des ersten Klemmteils am ersten Klemmteil angeordnet, welche fünfte Richtung des ersten Klemmteils eine Komponente in die vierte Richtung des ersten Klemmteils und eine Komponente in die dritte Richtung des ersten Klemmteils aufweist. Die zweite Vorsprunganordnung des zweiten Klemmteils ausgehend von der ersten Vorsprunganordnung des zweiten Klemmteils in eine fünfte Richtung des zweiten Klemmteils am zweiten Klemmteil angeordnet, welche fünfte Richtung des zweiten Klemmteils eine Komponente in die zweite Richtung des zweiten Klemmteils und eine Komponente in die dritte Richtung des zweiten Klemmteils aufweist.

Eine solche, zur zweiten Erfindung gehörende Kopplungseinrichtung hat den Vorteil, dass mit der Kopplungseinrichtung ein sehr gleichmässiges und damit stabiles Verbinden der zwei zu verbindenden Elemente ermöglicht wird. Zusätzlich dazu wird aber auch der Vorteil erreicht, dass eine Grösse und Dimensionierung der Kopplungseinrichtung weniger genau an die Grösse der beidseitig mit Hinterschnitten hinterschnittenen Nuten angepasst sein muss, um die zwei zu verbindenden Elemente optimal verbinden zu können. Dadurch kann die Kopplungseinrichtung vielfältiger eingesetzt werden. Eine solche, zur zweiten Erfindung gehörende Kopplungseinrichtung kann die vorgenannte Merkmalskombination aufweisen, ohne die ansonsten im vorliegenden Text als vorteilhaft oder erfindungsgemäss beschriebenen Merkmale zu beinhalten. Sie kann aber auch eines oder mehrere der im vorliegenden Text als zur vorliegenden erfindungsgemässen Kopplungseinrichtung gehörenden, vorteilhaften Merkmale aufweisen.

Unabhängig von der Kopplungseinrichtung gemäss der zweiten Erfindung sind bei der vorliegenden erfindungsgemässen Kopplungseinrichtung die zwei Klemmteile vorzugsweise je aus einem Kunststoff oder einem Metall, insbesondere Aluminium oder Stahl, gefertigt. Eine Fertigung aus Kunststoff hat den Vorteil, dass die zwei Klemmteile einfach und kostengünstig hergestellt werden können. Eine Fertigung aus Metall hat hingegen den Vorteil, dass die zwei Klemmteile sehr stabil hergestellt werden können. Daher können mit einer Kopplungseinrichtung mit zwei aus Metall gefertigten Klemmteilen zwei zu verbindende Elemente sehr fest und stabil miteinander verbunden werden. Insbesondere können damit sehr schwere zu verbindende Elemente miteinander verbunden und aneinander gehalten werden. Dies trifft ganz besonders zu, wenn auch die Spanneinrichtung aus Metall gefertigt ist. Eine Fertigung der zwei Klemmteile aus Stahl hat zudem den Vorteil, dass, wenn die zwei zu verbindenden Elemente Brandschutzelemente sind, mit der Kopplungseinrichtung eine Verbindung der zwei Brandschutzelemente ermöglicht, welche längere Zeit hohen, bei Bränden entstehenden Temperaturen standhalten kann. Entsprechend wird dadurch die Kopplungseinrichtung für Brandschutzanwendungen geeignet. Dies trifft ganz besonders zu, wenn auch die Spanneinrichtung aus Stahl gefertigt ist.

Alternativ zu diesen Varianten besteht aber auch die Möglichkeit, dass eines der zwei Klemmteile aus einem anderen Material als aus Kunststoff oder Metall gefertigt ist oder dass die zwei Klemmteile aus einem anderen Material als aus Kunststoff oder Metall gefertigt sind.

Vorzugsweise sind die zwei Klemmteile als massive Teile bzw. Vollkörperteile gefertigt. Dies hat den Vorteil, dass die zwei Klemmteile für das Material, aus welchem sie gefertigt sind, eine grosse Stabilität aufweisen.

Es besteht aber auch die Möglichkeit, dass die zwei Klemmteile nicht als massive Teile gefertigt sind. In einer bevorzugten Variante davon sind die zwei Klemmteile je aus gebogenem Stahlblech gefertigt. Dies hat den Vorteil, dass die zwei Klemmteile sehr Hitzebeständig sind, womit die Kopplungseinrichtung für Brandschutzanwendungen geeignet ist und dass zugleich die zwei Klemmteile vergleichsweise kostengünstig und mit vergleichsweise geringem Aufwand hergestellt werden können.

Eine Kopplungseinrichtung mit zwei Klemmteilen, welche aus gebogenem Stahlblech gefertigt sind, kann auch ohne die Merkmale, wonach der senkrecht auf die Wirkfläche des ersten Klemmteils stehende Normalenvektor sowohl eine in die erste Richtung des ersten Klemmteils zeigende Komponente als auch eine in die zweite Richtung des ersten Klemmteils zeigende Komponente aufweist, und der senkrecht auf die Wirkfläche des zweiten Klemmteils stehende Normalenvektor sowohl eine in die dritte Richtung des zweiten Klemmteils zeigende Komponente als auch eine in die vierte Richtung des zweiten Klemmteils zeigende Komponente aufweist, ausgeführt werden. Eine solche, zu einer dritten Erfindung gehörende Kopplungseinrichtung weist die folgenden Merkmale auf: Kopplungseinrichtung zum Verbinden von zwei zu verbindenden Elementen, welche zwei Elemente je eine mit wenigstens einem Hinterschnitt hinterschnittene Nut, insbesondere eine beidseitig mit je mindestens einem Hinterschnitt hinterschnittene und somit mit mindestens zwei Hinterschnitten hinterschnittene Nut, aufweisen, wobei die Kopplungseinrichtung ein erstes Klemmteil und ein zweites Klemmteil und somit zwei Klemmteile umfasst. Dabei ist zu beiden der zwei Klemmteilen je eine Längsrichtung, eine senkrecht zur Längsrichtung ausgerichtete erste Richtung, eine sowohl senkrecht zur Längsrichtung als auch senkrecht zur ersten Richtung ausgerichtete zweite Richtung, eine zur ersten Richtung entgegengesetzt ausgerichtete dritte Richtung und eine zur zweiten Richtung entgegengesetzt ausgerichtete vierte Richtung definiert ist. Das erste Klemmteil weist eine Wirkfläche auf, welche Wirkfläche zur Längsrichtung des ersten Klemmteils geneigt ist. Ein senkrecht auf die Wirkfläche des ersten Klemmteils stehender Normalenvektor weist eine in die zweite Richtung des ersten Klemmteils zeigende Komponente auf. Das zweite Klemmteil weist eine Wirkfläche auf, welche Wirkfläche zur Längsrichtung des zweiten Klemmteils geneigt ist. Dabei weist ein senkrecht auf die Wirkfläche des zweiten Klemmteils stehender Normalenvektor eine in die vierte Richtung des zweiten Klemmteils zeigende Komponente auf. Das erste Klemmteil weist eine in die erste Richtung des ersten Klemmteils vorstehende erste Vorsprunganordnung zum Hintergreifen eines ersten des wenigstens einen Hinterschnitts der Nut in einem ersten der zwei zu verbindenden Elemente auf und das zweite Klemmteil weist eine in die erste Richtung des zweiten Klemmteils vorstehende erste Vorsprunganordnung zum Hintergreifen eines ersten des wenigstens einen Hinterschnitts der Nut in einem zweiten der zwei zu verbindenden Elemente auf. Diese Kopplungseinrichtung umfasst ausserdem eine Spanneinrichtung zum aufeinander zu Spannen der zwei Klemmteile im Wesentlichen entlang einer Längsachse der I<opplungs-einrichtung, wobei in einem zusammengesetzten Zustand der Kopplungseinrichtung die zwei Klemmteile je mit ihrer Längsrichtung im Wesentlichen entlang der Längsachse der Kopplungseinrichtung ausgerichtet sind, während die erste Richtung des ersten Klemmteils und die erste Richtung des zweiten Klemmteils im Wesentlichen parallel zueinander ausgerichtet sind und die zweite Richtung des ersten Klemmteils und die zweite Richtung des zweiten Klemmteils im Wesentlichen parallel zueinander ausgerichtet sind, und die zwei Klemmteile je mit ihren Wirkflächen einander zugewandt hintereinander entlang der Längsachse angeordnet und durch die Spanneinrichtung entlang der Längsachse aufeinander zu spannbar oder aufeinander zu gespannt sind, wobei, wenn durch die Spanneinrichtung die zwei Klemmteile entlang der Längsachse aufeinander zu gespannt werden, aufgrund des Zusammenwirkens der Wirkflächen das erste Klemmteil und das zweite Klemmteil relativ zueinander in eine Richtung quer zur Längsachse der Kopplungseinrichtung gedrückt werden, sodass die am ersten Klemmteil angeordnete erste Vorsprunganordnung und die am zweiten Klemmteil angeordnete erste Vorsprunganordnung zueinander hin gedrückt werden. Dabei sind die zwei Klemmteile je aus gebogenem Stahlblech gefertigt. Eine solche, zur dritten Erfindung gehörende Kopplungseinrichtung hat den Vorteil, dass die zwei Klemmteile sehr Hitzebeständig sind, womit die Kopplungseinrichtung für Brandschutzanwendungen geeignet ist und dass zugleich die zwei Klemmteile vergleichsweise kostengünstig und mit vergleichsweise geringem Aufwand hergestellt werden können. Eine solche, zur dritten Erfindung gehörende Kopplungseinrichtung kann die vorgenannte Merkmalskombination aufweisen, ohne die ansonsten im vorliegenden Text als vorteilhaft oder erfindungsgemäss beschriebenen Merkmale zu beinhalten. Sie kann aber auch eines oder mehrere der im vorliegenden Text als zur vorliegenden erfindungsgemässen Kopplungseinrichtung gehörenden, vorteilhaften Merkmale aufweisen.

Unabhängig von der Kopplungseinrichtung gemäss der dritten Erfindung umfasst bei der vorliegenden erfindungsgemässen Kopplungseinrichtung die Spanneinrichtung bevorzugt eine Schraube. Dabei kann die Schraube durch eine Ausnehmung im einen der zwei Klemmteile führbar und durch die Ausnehmung im einen der zwei Klemmteile geführt in das andere der zwei Klemmteile schraubbar sein oder die Schraube kann sowohl durch eine Ausnehmung im einen der zwei Klemmteile als auch durch eine Ausnehmung im anderen der zwei Klemmteile führbar und durch diese Ausnehmungen in den zwei Klemmteilen geführt mit einer Mutter verschraubbar sein, um die zwei Klemmteile im Wesentlichen entlang der Längsachse der I<opplungs-einrichtung aufeinander zu zu spannen. Im ersten Fall ist dabei unerheblich, ob die Schraube durch eine Ausnehmung im ersten Klemmteil führbar und in das zweite Klemmteil schraubbar ist, oder ob die Schraube durch eine Ausnehmung im zweiten Klemmteil führbar und in das erste Klemmteil schraubbar ist. Vorzugsweise ist jedoch die Ausnehmung im einen der zwei Klemmteile etwas grösser als die Schraube, sodass sich das eine der zwei Klemmteile quer zur Schraube bewegen kann, wenn die Schraube durch die Ausnehmung geführt ist und in das andere der zwei Klemmteile geschraubt ist. Dadurch wird ermöglicht, dass, wenn durch die Spanneinrichtung die zwei Klemmteile entlang der Längsachse aufeinander zu gespannt werden, aufgrund des Zusammenwirkens der Wirkflächen das erste Klemmteil und das zweite Klemmteil relativ zueinander in eine Richtung quer zur Längsachse der Kopplungseinrichtung gedrückt und bewegt werden können, sodass die am ersten Klemmteil angeordnete erste Vorsprunganordnung und die am zweiten Klemmteil angeordnete erste Vorsprunganordnung zueinander hin gedrückt werden und das erste Klemmteil und das zweite Klemmteil entlang einer durch die erste Richtung und die dritte Richtung der zwei Klemmteile definierten Achse auseinander gedrückt werden. In zweiten Fall umfasst die Spanneinrichtung zudem vorzugsweise auch die Mutter. Dabei ist vorzugsweise die Ausnehmung in wenigstens einem der zwei Klemmteile etwas grösser als die Schraube, sodass sich das eine oder die zwei Klemmteile quer zur Schraube bewegen können, wenn die Schraube durch die entsprechende Ausnehmung geführt ist. Dadurch wird ermöglicht, dass, wenn durch die Spanneinrichtung die zwei Klemmteile entlang der Längsachse aufeinander zu gespannt werden, aufgrund des Zusammenwirkens der Wirkflächen das erste Klemmteil und das zweite Klemmteil relativ zueinander in eine Richtung quer zur Längsachse der Kopplungseinrichtung gedrückt und bewegt werden können, sodass die am ersten Klemmteil angeordnete erste Vorsprunganordnung und die am zweiten Klemmteil angeordnete erste Vorsprunganordnung zueinander hin gedrückt werden und das erste Klemmteil und das zweite Klemmteil entlang einer durch die erste Richtung und die dritte Richtung der zwei Klemmteile definierten Achse auseinander gedrückt werden.

Falls die Kopplungseinrichtung für Brandschutzzwecke eingesetzt werden soll, ist die Schraube vorzugsweise aus Stahl gefertigt. Falls die Spanneinrichtung zudem die vorgehend erwähnte Mutter umfasst, so ist vorzugsweise die Mutter aus Stahl gefertigt. Sowohl die Schraube als auch die gegebenenfalls vorhandene Mutter können allerdings auch aus einem anderen Material als aus Stahl gefertigt sein.

Alternativ zu diesen Varianten besteht aber auch die Möglichkeit, dass die Spanneinrichtung keine Schraube umfasst. Beispielsweise kann die Spanneinrichtung anstelle einer Schraube auch einen Schnellspanner mit einem Spannhebel aufweisen, um die zwei Klemmteile im Wesentlichen entlang einer Längsachse der I<opplungs-einrichtung aufeinander zu spannen.

Bevorzugt wird die Kopplungseinrichtung in einer Anordnung mit zwei zu verbindenden Elementen, welche Elemente je eine mit wenigstens einem Hinterschnitt hinterschnittene Nut, insbesondere eine beidseitig mit je mindestens einem Hinterschnitt hinterschnittene und somit mit mindestens zwei Hinterschnitten hinterschnittene Nut, aufweisen, eingesetzt. Entsprechend umfasst eine Anordnung vorteilhafterweise zwei zu verbindende Elemente, welche Elemente je eine mit wenigstens einem Hinterschnitt hinterschnittene Nut, insbesondere eine beidseitig mit je mindestens einem Hinterschnitt hinterschnittene und somit mit mindestens zwei Hinterschnitten hinterschnittene Nut, aufweisen, sowie wenigstens eine oder mehrere der vorgehend beschriebenen erfindungsgemässen Kopplungseinrichtungen.

Dabei sind die eine oder mehreren I<opplungseinrichtungen sowie die mit dem wenigstens einen Hinterschnitt hinterschnittenen Nuten der zwei zu verbindenden Elemente vorteilhafterweise derart bemessen, dass zum Verbinden der zwei zu verbindenden Elemente, wenn die zwei zu verbindenden Elemente mit ihren Nuten parallel zueinander ausgerichtet und mit ihren Nuten sich gegenüberliegend in Kontakt gebracht sind, die Kopplungseinrichtung im zusammengesetzten Zustand mit ihrer Längsachse parallel zu den Nuten ausgerichtet in den durch die sich gegenüberliegenden Nuten gebildeten Raum einführbar ist, sodass die erste Vorsprunganordnung des ersten Klemmteils den ersten des wenigstens einen Hinterschnitts der Nut im ersten der zwei zu verbindenden Elemente hintergreift und die erste Vorsprunganordnung des zweiten Klemmteils den ersten des wenigstens einen Hinterschnitts der Nut im zweiten der zwei zu verbindenden Elemente hintergreift, wonach durch die Spanneinrichtung die zwei Klemmteile mit ihren Wirkflächen im Wesentlichen entlang der Längsachse aufeinander zu spannbar sind, damit aufgrund des Zusammenwirkens der Wirkflächen die zwei Klemmteile relativ zueinander in die Richtung quer zur Längsachse der Kopplungseinrichtung gedrückt werden, sodass die am ersten Klemmteil angeordnete erste Vorsprunganordnung und die am zweiten Klemmteils angeordnete erste Vorsprunganordnung aufeinander zu gedrückt werden und damit durch die am ersten Klemmteil angeordnete erste Vorsprunganordnung und die am zweiten Klemmteil angeordnete erste Vorsprunganordnung der erste des wenigstens einen Hinterschnitts der Nut im ersten der zwei zu verbindenden Elemente und der erste des wenigstens einen Hinterschnitts der Nut im zweiten der zwei zu verbindenden Elemente aufeinander zu gedrückt werden, um die zwei zu verbindenden Elemente durch zusammenklemmen der zwei zu verbindenden Elemente zu verbinden. Vorteilhafterweise ist dabei die Richtung quer zur Längsachse der I<opplungseinrichtung, in welche Richtung aufgrund des Zusammenwirkens der Wirkflächen die zwei Klemmteile relativ zueinander gedrückt werden, zudem so ausgerichtet, dass das erste Klemmteil und das zweite Klemmteil auch entlang einer durch die erste Richtung und die dritte Richtung der zwei Klemmteile definierten Achse auseinander gedrückt werden, sodass sich die zwei Klemmteile seitlich an den beiden Rändern der Nut im ersten zu verbindenden Element und an den Rändern der Nut im zweiten zu verbindenden Element absperren, um beim Verbinden der zwei zu verbindenden Elemente die zwei zu verbindenden Elemente in eine Richtung quer zu den Nuten in den zwei zu verbindenden Elementen korrekt zu positionieren.

Die Kopplungseinrichtung kann jedoch auch separat von der Anordnung bestehen und somit separat von der Anordnung hergestellt und vertrieben werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a, b, c: je eine schematische Darstellung einer Anordnung mit zwei zu verbindenden Elementen und einer erfindungsgemässen I<opplungseinrichtung zum Verbinden der zwei zu verbindenden Elemente,
- Fig. 2a, b, c: je eine schematische Darstellung einer weiteren Anordnung mit den zwei zu verbindenden Elementen und einer weiteren erfindungsgemässen Kopplungseinrichtung zum Verbinden der zwei zu verbindenden Elemente,
- Fig. 3: eine schematische Explosionsdarstellung einer weiteren Anordnung mit den zwei zu verbindenden Elementen mit einer weiteren erfindungsgemässen Kopplungseinrichtung zum Verbinden der zwei zu verbindenden Elemente,
- Fig. 4a, b, c: je eine schematische Darstellung einer weiteren Anordnung mit den zwei zu verbindenden Elementen und einer weiteren erfindungsgemässen Kopplungseinrichtung zum Verbinden der zwei zu verbindenden Elemente,
- Fig. 5a, b, c, d: je eine schematische Darstellung einer weiteren Anordnung mit den zwei zu verbindenden Elementen und einer weiteren erfindungsgemässen Kopplungseinrichtung zum Verbinden der zwei zu verbindenden Elemente, und
- Fig. 6: eine schematische Explosionsdarstellung einer weiteren Anordnung mit den zwei zu verbindenden Elementen mit einer weiteren, nicht erfindungsgemässen Kopplungseinrichtung zum Verbinden der zwei zu verbindenden Elemente.

Grundsätzlich sind in den Figuren gleiche Teile mit gleichen Bezugszeichen versehen.

### Wege zur Ausführung der Erfindung

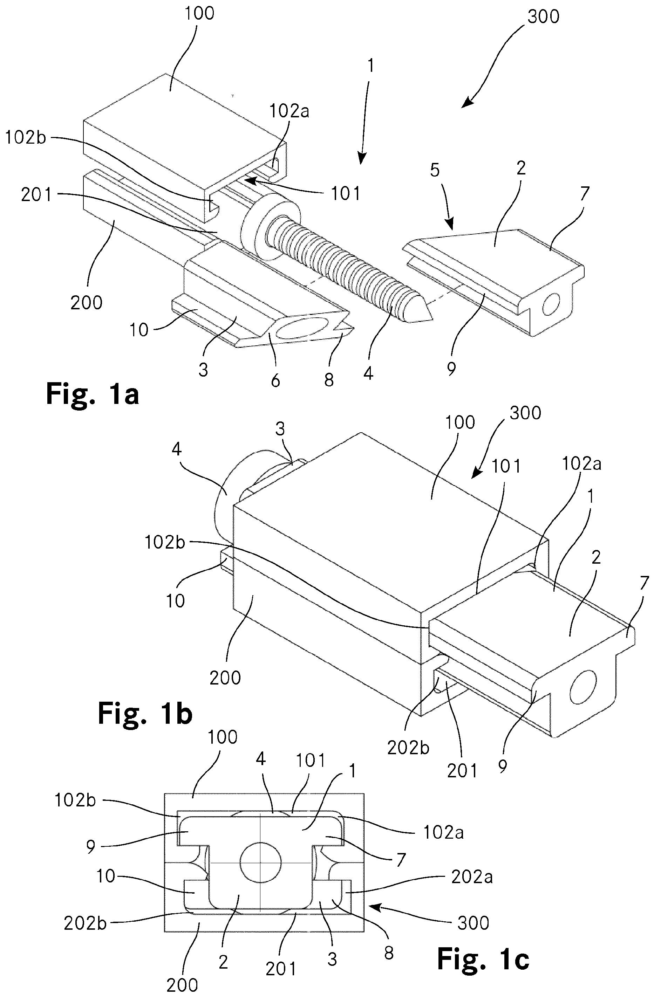

Die Figuren 1a, 1b und 1c zeigen je eine schematische Darstellung einer Anordnung 300 mit zwei zu verbindenden Elementen 100, 200 und einer erfindungsgemässen Kopplungseinrichtung 1 zum Verbinden der zwei zu verbindenden Elemente 100, 200. Dabei weisen die zwei zu verbindenden Elemente 100, 200 je eine beidseitig mit je einem Hinterschnitt 102a, 102b, 202a, 202b hinterschnittene und somit mit zwei Hinterschnitten 102a, 102b, 202a, 202b hinterschnittene Nut 101, 201 auf. Damit weisen die zwei zu verbindenden Elemente 100, 200 je eine mit wenigstens einem Hinterschnitt 102a, 102b, 202a, 202b hinterschnittene Nut 101, 201 auf.

In den Figuren 1a, 1b und 1c sind die zwei zu verbindenden Elemente 100, 200 jeweils als Längsprofile dargestellt. Dabei weisen die Längsprofile je eine Länge auf, welche etwas kürzer als eine Länge der Kopplungseinrichtung 1 ist. Daher reicht die I<opplungseinrichtung 1 in einem zusammengesetzten Zustand der Kopplungseinrichtung 1 an beiden Enden über die zu verbindenden Elemente 100, 200 hinaus. Dadurch ist die Funktionsweise der Kopplungseinrichtung 1 gut ersichtlich. Die zwei zu verbindenden Elemente 100, 200 können aber auch viel länger als in den Figuren 1a, 1b und 1c dargestellt sein. Zudem können die zwei mit der erfindungsgemässen I<opplungseinrichtung 1 zu verbindenden Elemente 100, 200 auch massiver und grösser als in den Figuren 1a, 1b und 1c dargestellt sein, solange sie je eine mit wenigstens einem Hinterschnitt hinterschnittene Nut aufweisen. Beispielsweise können die zwei zu verbindenden Elemente Aluminiumvierkantprofile sein, welche in jeder Seitenfläche eine Nut aufweisen. Beispielsweise können die zwei zu verbindenden Elemente aber auch ganze Fassadenelemente für die Fassade eines Gebäudes oder Fensterelemente für ein Gebäude sein. So können diese Elemente je eine um das jeweilige Element umlaufende Nut aufweisen. Diese Nut kann auf einer Seite mit einem entlang der Nut um das jeweilige Element umlaufenden Hinterschnitt hinterschnitten sein. Genauso kann diese Nut aber auch auf beiden Seiten je mit einem entlang der Nut um das jeweilige Element umlaufenden Hinterschnitt hinterschnitten ist.

In der Figur 1a ist eine Schrägansicht einer Explosionsdarstellung der I<opplungseinrichtung 1 und der zwei Elemente 100, 200 gezeigt. Dabei verläuft eine Längsachse der Kopplungseinrichtung 1 in der Darstellung der Figur 1a von links oben nach rechts unten. In der Figur 1b ist eine Schrägansicht der Kopplungseinrichtung 1 und der zwei Elemente 100, 200 aus der gleichen Perspektive wie in der Figur 1a gezeigt. Im Gegensatz zur Figur 1a sind jedoch in der Figur 1b die zwei zu verbindenden Elemente 100, 200 durch die Kopplungseinrichtung 1 miteinander verbunden dargestellt.

Wie in den Figuren 1a und 1b erkennbar, umfasst die Kopplungseinrichtung 1 ein erstes Klemmteil 2 und ein zweites Klemmteil 3 und somit zwei Klemmteile 2, 3. Weiter umfasst die Kopplungseinrichtung 1 eine Schraube als Spanneinrichtung 4 zum aufeinander zu Spannen der zwei Klemmteile 2, 3 im Wesentlichen entlang der Längsachse der I<opplungs-einrichtung 1. Zu beiden der zwei Klemmteilen 2, 3 ist je eine Längsrichtung, eine senkrecht zur Längsrichtung ausgerichtete erste Richtung, eine sowohl senkrecht zur Längsrichtung als auch senkrecht zur ersten Richtung ausgerichtete zweite Richtung, eine zur ersten Richtung entgegengesetzt ausgerichtete dritte Richtung und eine zur zweiten Richtung entgegengesetzt ausgerichtete vierte Richtung definiert. In der Darstellung in der Figuren 1a und 1b sind die zwei Klemmteile 2, 3 derart ausgerichtet dargestellt, dass bei beiden Klemmteilen 2, 3 die Längsrichtung von links oben in der Darstellung nach rechts unten in der Darstellung verläuft, dass bei beiden Klemmteilen 2, 3 die erste Richtung in der Darstellung von links unten nach rechts oben zeigt, während die zweite Richtung in der Darstellung von unten nach oben zeigt. Entsprechend sind in den Figuren 1a und 1b die zwei Klemmteile 2, 3 derart ausgerichtet dargestellt, dass bei beiden Klemmteilen 2, 3 die dritte Richtung in der Darstellung von rechts oben nach links unten zeigt, während die vierte Richtung in der Darstellung von oben nach unten zeigt.

In der Figur 1a ist zu erkennen, dass das erste Klemmteil 2 eine Wirkfläche 5 aufweist, welche Wirkfläche 5 zur Längsrichtung des ersten Klemmteils 2 geneigt ist. Daher ist ein senkrecht auf die Wirkfläche 5 des ersten Klemmteils 2 stehender Normalenvektor zwar nicht parallel zur Längsrichtung des ersten Klemmteils 2 ausgerichtet, weist aber eine in die Längsrichtung des ersten Klemmteils 2 zeigende Komponente auf. Weiter weist der senkrecht auf die Wirkfläche 5 des ersten Klemmteils 2 stehende Normalenvektor sowohl eine in die erste Richtung des ersten Klemmteils 2 zeigende Komponente als auch eine in die zweite Richtung des ersten Klemmteils 2 zeigende Komponente auf. Beim ersten Klemmteil 2 beträgt ein in einer durch die Längsrichtung und die erste Richtung aufgespannten Ebene gemessener Winkel zwischen der Wirkfläche 5 und der ersten Richtung 45°, während ein in einer durch die Längsrichtung und die zweite Richtung aufgespannten Ebene gemessener Winkel zwischen der Wirkfläche 5 und der zweiten Richtung 45° beträgt.

Das erste Klemmteil 2 weist eine in die erste Richtung des ersten Klemmteils 2 vorstehende erste Vorsprunganordnung 7 zum Hintergreifen eines ersten der zwei Hinterschnitte 102a der Nut 101 im ersten der zwei zu verbindenden Elemente 100 auf. Weiter weist das erste Klemmteil 2 eine in die dritte Richtung des ersten Klemmteils 2 vorstehende zweite Vorsprunganordnung 9 zum Hintergreifen eines zweiten der zwei Hinterschnitte 102b der Nut 101 im ersten der zwei zu verbindenden Elemente 100 auf. Dabei ist die zweite Vorsprunganordnung 9 des ersten Klemmteils 2 ausgehend von der ersten Vorsprunganordnung 7 des ersten Klemmteils 2 in die dritte Richtung des ersten Klemmteils 2 am ersten Klemmteil 2 angeordnet. Dabei sind die erste Vorsprunganordnung 7 des ersten Klemmteils 2 und die zweite Vorsprunganordnung 9 des ersten Klemmteils 2 auf einer in die zweite Richtung des ersten Klemmteils 2 liegenden Hälfte des ersten Klemmteils 2, d.h., in der Figur 1a auf der nach oben zeigenden Hälfte des ersten Klemmteils 2, angeordnet.

Die erste Vorsprunganordnung 7 des ersten Klemmteils 2 bildet in Längsrichtung des ersten Klemmteils 2 betrachtet in einem Bereich eines der Wirkfläche 5 des ersten Klemmteils 2 gegenüberliegenden, ersten Endes des ersten Klemmteils 2 einen Vorsprung zum Hintergreifen des ersten der zwei Hinterschnitte 102a der Nut 101 im ersten der zwei zu verbindenden Elemente 100. Weiter bildet die erste Vorsprunganordnung 7 des ersten Klemmteils 2 auch im Bereich der Wirkfläche 5 des ersten Klemmteils 2 einen Vorsprung zum Hintergreifen des ersten der zwei Hinterschnitte 102a der Nut 101 im ersten der zwei zu verbindenden Elemente 100. Dabei ist der im Bereich des ersten Endes des ersten Klemmteils 2 angeordnete Vorsprung der ersten Vorsprunganordnung 7 und der im Bereich der Wirkfläche 5 des ersten Klemmteils 2 angeordnete Vorsprung der ersten Vorsprunganordnung 7 als ein kontinuierlicher, sich entlang der Längsrichtung des ersten Klemmteils 2 erstreckender Vorsprung ausgebildet. Die erste Vorsprunganordnung 7 des ersten Klemmteils 2 besteht daher aus einem entlang der Längsrichtung des ersten Klemmteils 2 verlaufenden Vorsprung.

Die zweite Vorsprunganordnung 9 des ersten Klemmteils 2 bildet in Längsrichtung des ersten Klemmteils 2 betrachtet im Bereich des ersten Endes des ersten Klemmteils 2 einen Vorsprung zum Hintergreifen des zweiten der zwei Hinterschnitte 102b der Nut 101 im ersten der zwei zu verbindenden Elemente 100. Weiter bildet die zweite Vorsprunganordnung 9 des ersten Klemmteils 2 auch im Bereich der Wirkfläche 5 des ersten Klemmteils 2 einen Vorsprung zum Hintergreifen des zweiten der zwei Hinterschnitte 102b der Nut 101 im ersten der zwei zu verbindenden Elemente 100. Dabei ist der im Bereich des ersten Endes des ersten Klemmteils 2 angeordnete Vorsprung der zweiten Vorsprunganordnung 9 und der im Bereich der Wirkfläche 5 des ersten Klemmteils 2 angeordnete Vorsprung der zweiten Vorsprunganordnung 9 als ein kontinuierlicher, sich entlang der Längsrichtung des ersten Klemmteils 2 erstreckender Vorsprung ausgebildet. Die zweite Vorsprunganordnung 9 des ersten Klemmteils 2 besteht daher aus einem entlang der Längsrichtung des ersten Klemmteils 2 verlaufenden Vorsprung.

In der Figur 1a ist zu erkennen, dass das zweite Klemmteil 3 eine Wirkfläche 6 aufweist, welche Wirkfläche 6 zur Längsrichtung des zweiten Klemmteils 3 geneigt ist. Daher ist ein senkrecht auf die Wirkfläche 6 des zweiten Klemmteils 3 stehender Normalenvektor zwar nicht parallel zur Längsrichtung des zweiten Klemmteils 3 ausgerichtet, weist aber eine in die Längsrichtung des zweiten Klemmteils 3 zeigende Komponente auf. Weiter weist der senkrecht auf die Wirkfläche 6 des zweiten Klemmteils 3 stehende Normalenvektor sowohl eine in die dritte Richtung des zweiten Klemmteils 3 zeigende Komponente als auch eine in die vierte Richtung des zweiten Klemmteils 3 zeigende Komponente auf. Beim zweiten Klemmteil 3 beträgt ein in einer durch die Längsrichtung und die dritte Richtung aufgespannten Ebene gemessener Winkel zwischen der Wirkfläche 6 und der dritten Richtung 45°, während ein in einer durch die Längsrichtung und die vierte Richtung aufgespannten Ebene gemessener Winkel zwischen der Wirkfläche 6 und der vierten Richtung 45° beträgt.

Das zweite Klemmteil 3 weist eine in die erste Richtung des zweiten Klemmteils 3 vorstehende erste Vorsprunganordnung 8 zum Hintergreifen eines ersten der zwei Hinterschnitte 202a der Nut 201 im zweiten der zwei zu verbindenden Elemente 200 auf. Weiter weist das zweite Klemmteil 3 eine in die dritte Richtung des zweiten Klemmteils 3 vorstehende zweite Vorsprunganordnung 10 zum Hintergreifen eines zweiten der zwei Hinterschnitte 202b der Nut 201 im zweiten der zwei zu verbindenden Elemente 200 auf. Dabei ist die zweite Vorsprunganordnung 10 des zweiten Klemmteils 3 ausgehend von der ersten Vorsprunganordnung 8 des zweiten Klemmteils 3 in die dritte Richtung des zweiten Klemmteils 3 am zweiten Klemmteil 3 angeordnet. Dabei sind die erste Vorsprunganordnung 8 des zweiten Klemmteils 3 und die zweite Vorsprunganordnung 10 des zweiten Klemmteils 3 auf einer in die vierte Richtung des zweiten Klemmteils 3 liegenden Hälfte des zweiten Klemmteils 3, d.h., in der Figur 1a auf der nach unten zeigenden Hälfte des zweiten Klemmteils 3, angeordnet.

Die erste Vorsprunganordnung 8 des zweiten Klemmteils 3 bildet in Längsrichtung des zweiten Klemmteils 3 betrachtet in einem Bereich eines der Wirkfläche 6 des zweiten Klemmteils 3 gegenüberliegenden, ersten Endes des zweiten Klemmteils 3 einen Vorsprung zum Hintergreifen des ersten der zwei Hinterschnitte 202a der Nut 201 im zweiten der zwei zu verbindenden Elemente 200. Weiter bildet die erste Vorsprunganordnung 8 des zweiten Klemmteils 3 auch im Bereich der Wirkfläche 6 des zweiten Klemmteils 3 einen Vorsprung zum Hintergreifen des ersten der zwei Hinterschnitte 202a der Nut 201 im zweiten der zwei zu verbindenden Elemente 200. Dabei ist der im Bereich des ersten Endes des zweiten Klemmteils 3 angeordnete Vorsprung der ersten Vorsprunganordnung 8 und der im Bereich der Wirkfläche 6 des zweiten Klemmteils 3 angeordnete Vorsprung der ersten Vorsprunganordnung 8 als ein kontinuierlicher, sich entlang der Längsrichtung des zweiten Klemmteils 3 erstreckender Vorsprung ausgebildet. Die erste Vorsprunganordnung 8 des zweiten Klemmteils 3 besteht daher aus einem entlang der Längsrichtung des zweiten Klemmteils 3 verlaufenden Vorsprung.

Die zweite Vorsprunganordnung 10 des zweiten Klemmteils 3 bildet in Längsrichtung des zweiten Klemmteils 3 betrachtet im Bereich des ersten Endes des zweiten Klemmteils 3 einen Vorsprung zum Hintergreifen des zweiten der zwei Hinterschnitte 202b der Nut 201 im zweiten der zwei zu verbindenden Elemente 200. Weiter bildet die zweite Vorsprunganordnung 10 des zweiten Klemmteils 3 auch im Bereich der Wirkfläche 6 des zweiten Klemmteils 3 einen Vorsprung zum Hintergreifen des zweiten der zwei Hinterschnitte 202b der Nut 201 im zweiten der zwei zu verbindenden Elemente 200. Dabei ist der im Bereich des ersten Endes des zweiten Klemmteils 3 angeordnete Vorsprung der zweiten Vorsprunganordnung 10 und der im Bereich der Wirkfläche 6 des zweiten Klemmteils 3 angeordnete Vorsprung der zweiten Vorsprunganordnung 10 als ein kontinuierlicher, sich entlang der Längsrichtung des zweiten Klemmteils 3 erstreckender Vorsprung ausgebildet. Die zweite Vorsprunganordnung 10 des zweiten Klemmteils 3 besteht daher aus einem entlang der Längsrichtung des ersten Klemmteils 3 verlaufenden Vorsprung.

In einem zusammengesetzten Zustand der Kopplungseinrichtung 1 sind die zwei Klemmteile 2, 3 je mit ihrer Längsrichtung im Wesentlichen entlang der Längsachse der Kopplungseinrichtung 1 ausgerichtet, während die erste Richtung des ersten Klemmteils 2 und die erste Richtung des zweiten Klemmteils 3 im Wesentlichen parallel zueinander ausgerichtet sind und die zweite Richtung des ersten Klemmteils 2 und die zweite Richtung des zweiten Klemmteils 3 im Wesentlichen parallel zueinander ausgerichtet sind, und die zwei Klemmteile 2, 3 je mit ihren Wirkflächen 5, 6 einander zugewandt hintereinander entlang der Längsachse der Kopplungseinrichtung 1 angeordnet und durch die Spanneinrichtung 4 entlang der Längsachse aufeinander zu spannbar oder aufeinander zu gespannt sind, wobei, wenn durch die Spanneinrichtung 4 die zwei Klemmteile 2, 3 entlang der Längsachse aufeinander zu gespannt werden, aufgrund des Zusammenwirkens der Wirkflächen 5, 6 das erste Klemmteil 2 und das zweite Klemmteil 3 relativ zueinander in eine Richtung quer zur Längsachse der Kopplungseinrichtung 1 gedrückt werden, sodass die am ersten Klemmteil 2 angeordnete erste Vorsprunganordnung 7 und die am zweiten Klemmteil 3 angeordnete erste Vorsprunganordnung 8 zueinander hin gedrückt werden und sodass die am ersten Klemmteil 2 angeordnete zweite Vorsprunganordnung 9 und die am zweiten Klemmteil 3 angeordnete zweite Vorsprunganordnung 10 zueinander hin gedrückt werden.

Wie bereits erläutert, weist der senkrecht auf die Wirkfläche 5 des ersten Klemmteils 2 stehende Normalenvektor sowohl eine in Längsrichtung des ersten Klemmteils 2 zeigende Komponente als auch eine in die erste Richtung des ersten Klemmteils 2 zeigende Komponente und eine in die zweite Richtung des ersten Klemmteils 2 zeigende Komponente auf. Weiter weist der senkrecht auf die Wirkfläche 6 des zweiten Klemmteils 3 stehende Normalenvektor sowohl eine in Längsrichtung des zweiten Klemmteils 3 zeigende Komponente als auch eine in die dritte Richtung des zweiten Klemmteils 3 zeigende Komponente als auch eine in die vierte Richtung des zweiten Klemmteils 3 zeigende Komponente auf. Dies führt dazu, dass, wenn durch die Spanneinrichtung 4 die zwei Klemmteile 2, 3 entlang der Längsachse der Kopplungseinrichtung 1 aufeinander zu gespannt werden, aufgrund des Zusammenwirkens der Wirkflächen 5, 6 das erste Klemmteil 2 relativ zum zweiten Klemmteil 3 in eine Richtung gedrückt wird, welche Richtung sowohl eine in die dritte Richtung als auch eine in die vierte Richtung des ersten Klemmteils 2 gerichtete Komponente aufweist, während das zweite Klemmteil 3 relativ zum ersten Klemmteil 2 in eine Richtung gedrückt wird, welche sowohl eine in die erste Richtung als auch eine in die zweite Richtung des zweiten Klemmteils 3 gerichtete Komponente aufweist. Daher werden, wie bereits beschrieben, die am ersten Klemmteil 2 angeordnete erste Vorsprunganordnung 7 und die am zweiten Klemmteil 3 angeordnete erste Vorsprunganordnung 8 zueinander hin gedrückt. Auch werden daher, wie bereits beschrieben, die am ersten Klemmteil 2 angeordnete zweite Vorsprunganordnung 9 und die am zweiten Klemmteil 3 angeordnete zweite Vorsprunganordnung 10 zueinander hin gedrückt.

Genauer gesagt werden dadurch die am ersten Klemmteil 2 angeordnete erste Vorsprunganordnung 7 und die am zweiten Klemmteil 3 angeordnete erste Vorsprunganordnung 8 in eine Annäherungsrichtung zueinander hin gedrückt, während auch die am ersten Klemmteil 2 angeordnete zweite Vorsprunganordnung 9 und die am zweiten Klemmteil 3 angeordnete zweite Vorsprunganordnung 10 in die Annäherungsrichtung zueinander hin gedrückt werden. Diese Annäherungsrichtung weist eine Komponente entlang einer durch die zweite Richtung und die vierte Richtung der zwei Klemmteile 2, 3 definierten Achse auf. Zudem weist die Annäherungsrichtung aber auch eine Komponente entlang einer durch die erste Richtung und die dritte Richtung der zwei Klemmteile 2, 3 definierten Achse auf. Entlang dieser durch die erste Richtung und die dritte Richtung der zwei Klemmteile 2, 3 definierten Achse werden das erste Klemmteil 2 und das zweite Klemmteil 3 auseinander gedrückt, sodass sich die zwei Klemmteile 2, 3 seitlich an den beiden Rändern der Nut 101 im ersten zu verbindenden Element 100 und an den Rändern der Nut 201 im zweiten zu verbindenden Element 200 absperren. Dies führt dazu, dass beim Verbinden der zwei zu verbindenden Elemente 100, 200, wenn die Spanneinrichtung 4 gespannt wird, die zwei zu verbindenden Elemente 100, 200 nicht nur zusammengeklemmt werden, sondern auch in eine Richtung quer zu den Nuten 101, 201 präzise und reproduzierbar zueinander positioniert werden.

Bei der in den Figuren 1a, 1b und 1c gezeigten Kopplungseinrichtung 1 sind die zwei Klemmteile 2, 3 je als Vollkörperteile aus Kunststoff gefertigt. Die Schraube, welche die Spanneinrichtung 4 bildet, ist aus Stahl gefertigt und weist ein selbstschneidendes Gewinde auf, um in eine gewindelose Öffnung in einem I<unststoffelement geschraubt zu werden. Dabei weist das zweite Klemmteil 3 eine entlang seiner Längsrichtung durchgehende Ausnehmung auf, welche einen grösseren Querschnitt als die Schraube aufweist. Das erste Klemmteil 2 hingegen weist eine entlang seiner Längsrichtung durchgehende Ausnehmung auf, welche einen etwas kleineren Querschnitt als die Schraube aufweist. Damit kann die Schraube durch diese Ausnehmung im zweiten Klemmteil 3 geführt und selbstschneidend in das erste Klemmteil 2 geschraubt werden, um die zwei Klemmteile 2, 3 im Wesentlichen entlang der Längsachse der I<opplungseinrichtung 1 aufeinander zu zu spannen. Da dabei die Ausnehmung im zweiten Klemmteil 3 einen grösseren Querschnitt als die Schraube aufweist, kann sich das zweite Klemmteil 3 quer zur Schraube bewegen, wenn die Schraube durch die Ausnehmung im zweiten Klemmteil 3 geführt ist und in das erste Klemmteil 2 geschraubt ist. Dadurch wird ermöglicht, dass, wenn durch die Spanneinrichtung 4 die zwei Klemmteile 2, 3 entlang der Längsachse aufeinander zu gespannt werden, aufgrund des Zusammenwirkens der Wirkflächen 5, 6 das erste Klemmteil 2 und das zweite Klemmteil 3 relativ zueinander in eine Richtung quer zur Längsachse der Kopplungseinrichtung 1 gedrückt und bewegt werden können, sodass die am ersten Klemmteil 2 angeordnete erste Vorsprunganordnung 7 und zweite Vorsprunganordnung 9 und die am zweiten Klemmteil 2 angeordnete erste Vorsprunganordnung 8 und zweite Vorsprunganordnung 10 zueinander hin gedrückt und das erste Klemmteil 2 und das zweite Klemmteil 3 entlang einer durch die erste Richtung und die dritte Richtung der zwei Klemmteile 2, 3 definierten Achse auseinander gedrückt werden können.

In der Figur 1b ist eine Schrägansicht der Kopplungseinrichtung 1 und der zwei Elemente 100, 200 aus der gleichen Perspektive wie in der Figur 1a gezeigt. Im Gegensatz zur Figur 1a sind jedoch in der Figur 1b die zwei zu verbindenden Elemente 100, 200 durch die Kopplungseinrichtung 1 miteinander verbunden dargestellt.

In der Figur 1c sind wie bereits in der Figur 1b die zwei zu verbindenden Elemente 100, 200 durch die Kopplungseinrichtung 1 miteinander verbunden dargestellt. Im Gegensatz zur Figur 1b sind in der Figur 1c jedoch eine Aufsicht auf die Anordnung 300 mit der Kopplungseinrichtung 1 und den zwei zu verbindenden Elementen 100, 200 gezeigt, in welcher Ansicht die Blickrichtung entlang der Längsachse der Kopplungseinrichtung 1 verläuft.

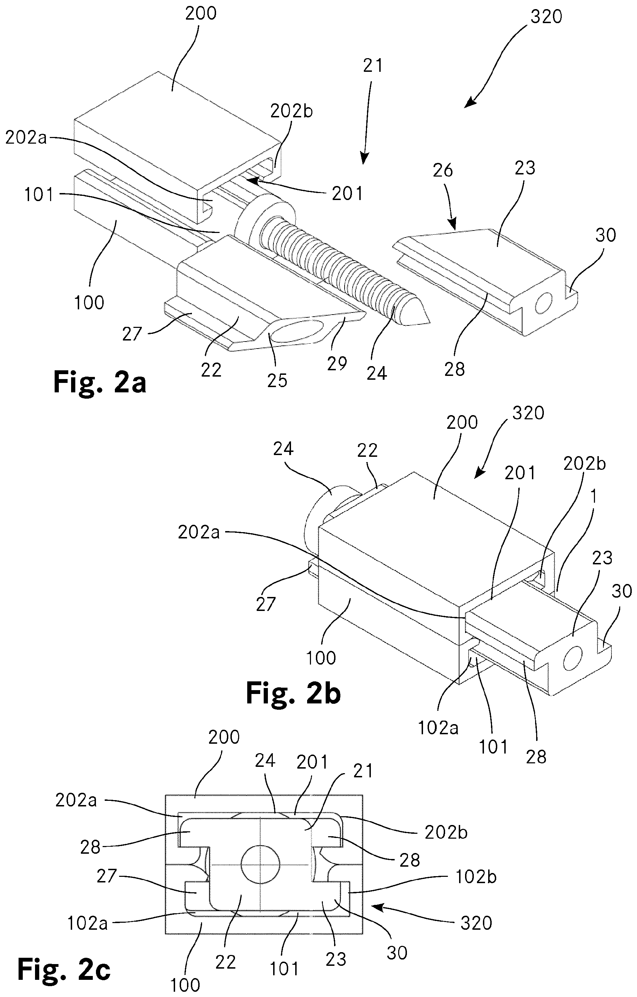

Die Figuren 2a, 2b und 2c zeigen je eine schematische Darstellung einer weiteren Anordnung 320 mit den zwei zu verbindenden Elementen 100, 200 mit einer weiteren erfindungsgemässen Kopplungseinrichtung 21 zum Verbinden der zwei zu verbindenden Elemente 100, 200. Diese weitere Kopplungseinrichtung 21 ist in vielen Aspekten gleich konstruiert wie die in den Figuren 1a, 1b und 1c gezeigte Kopplungseinrichtung 1. Analog zu den Figuren 1a und 1b ist in der Figur 2a eine Schrägansicht einer Explosionsdarstellung der Kopplungseinrichtung 21 und der zwei Elemente 100, 200 gezeigt, während in der Figur 2b eine Schrägansicht aus der gleichen Perspektive gezeigt ist, wobei die zwei zu verbindenden Elemente 100, 200 durch die Kopplungseinrichtung 21 miteinander verbunden dargestellt sind. In Figur 2c ist analog zur Figur 1c eine Aufsicht auf die Anordnung 320 mit der Kopplungseinrichtung 21 und den zwei zu verbindenden Elementen 100, 200 gezeigt, in welcher Ansicht die Blickrichtung entlang der Längsachse der Kopplungseinrichtung 21 verläuft. Dabei sind die zwei zu verbindenden Elemente 100, 200 durch die Kopplungseinrichtung 21 miteinander verbunden dargestellt.

Im Gegensatz zu den Figuren 1a, 1b und 1c sind ist bei der in den Figuren 2a, 2b und 2c gezeigten Kopplungseinrichtung 21 das erste Klemmteil 22 und das zweite Klemmteil 23 vertauscht bzw. die Schraube, welche die Spanneinrichtung 24 bildet, ist durch eine Ausnehmung im ersten Klemmteil 22 geführt und in das zweite Klemmteil 23 geschraubt. Dabei weist die Ausnehmung im ersten Klemmteil 22 einen grösseren Querschnitt als die Schraube auf.

Im Gegensatz zu den Figuren 1a und 1b sind zudem in den Figuren 2a und 2b die Richtungen, welche zu den zwei Klemmteilen 22, 23 definiert sind, vertauscht dargestellt. So sind in der der Darstellung in der Figuren 2a und 2b die zwei Klemmteile 22, 23 derart ausgerichtet dargestellt, dass bei beiden Klemmteilen 22, 23 die Längsrichtung von links oben in der Darstellung nach rechts unten in der Darstellung verläuft, dass bei beiden Klemmteilen 22, 23 die erste Richtung in der Darstellung von rechts oben nach links unten zeigt, während die zweite Richtung in der Darstellung von oben nach unten zeigt. Entsprechend sind in den Figuren 2a und 2b die zwei Klemmteile 22, 23 derart ausgerichtet dargestellt, dass bei beiden Klemmteilen 22, 23 die dritte Richtung in der Darstellung von links unten nach rechts oben zeigt, während die vierte Richtung in der Darstellung von unten nach oben zeigt.

Die in den Figuren 2a, 2b und 2c gezeigte weitere Kopplungseinrichtung 21 ist, wie bereits erwähnt, in vielen Aspekten gleich konstruiert wie die in den Figuren 1a, 1b und 1c gezeigte Kopplungseinrichtung 1. So sind bei der in den Figuren 2a, 2b und 2c gezeigten Kopplungseinrichtung 21 die Wirkflächen 25, 26 gleich wie bei der in den Figuren 1a, 1b und 1c gezeigten Kopplungseinrichtung 1 ausgerichtet. Auch weist bei der in den Figuren 2a, 2b und 2c gezeigten Kopplungseinrichtung 21 das erste Klemmteil 22 die gleiche in die erste Richtung des ersten Klemmteils 22 vorstehende erste Vorsprunganordnung 27 zum Hintergreifen eines ersten der zwei Hinterschnitte 102a der Nut 101 im ersten der zwei zu verbindenden Elemente 100 auf. Ebenfalls weist bei der in den Figuren 2a, 2b und 2c gezeigten Kopplungseinrichtung 21 das zweite Klemmteil 23 die gleiche in die erste Richtung des zweiten Klemmteils 23 vorstehende erste Vorsprunganordnung 28 zum Hintergreifen eines ersten der zwei Hinterschnitte 202a der Nut 201 im zweiten der zwei zu verbindenden Elemente 200 auf.

Im Gegensatz zur in den Figuren 1a, 1b und 1c gezeigten Kopplungseinrichtung 1 sind jedoch bei der in den Figuren 2a, 2b und 2c gezeigten Kopplungseinrichtung 21 die zweiten Vorsprunganordnungen 29, 30 anders an den zwei Klemmteilen 22, 23 angeordnet. So dient die zweite Vorsprunganordnung 29 des ersten Klemmteils 22 zum Hintergreifen des zweiten der mindestens zwei Hinterschnitte 202b der Nut 202 im zweiten der zwei zu verbindenden Elemente 200, während die zweite Vorsprunganordnung 30 des zweiten Klemmteils 23 zum Hintergreifen des zweiten der mindestens zwei Hinterschnitte 101b der Nut 101 im ersten der zwei zu verbindenden Elemente 100 dient. Daher ist die zweite Vorsprunganordnung 29 des ersten Klemmteils 22 ausgehend von der ersten Vorsprunganordnung 27 des ersten Klemmteils 22 in eine fünfte Richtung des ersten Klemmteils 22 am ersten Klemmteil 22 angeordnet, welche fünfte Richtung des ersten Klemmteils 22 eine Komponente in die vierte Richtung des ersten Klemmteils 22 und eine Komponente in die dritte Richtung des ersten Klemmteils 22 aufweist. Zudem ist die zweite Vorsprunganordnung 30 des zweiten Klemmteils 23 ausgehend von der ersten Vorsprunganordnung 28 des zweiten Klemmteils 23 in eine fünfte Richtung des zweiten Klemmteils 23 am zweiten Klemmteil 23 angeordnet, welche fünfte Richtung des zweiten Klemmteils 23 eine Komponente in die zweite Richtung des zweiten Klemmteils 23 und eine Komponente in die dritte Richtung des zweiten Klemmteils 23 aufweist. Dabei ist die in die vierte Richtung des ersten Klemmteils 22 gerichtete Komponente der fünften Richtung des ersten Klemmteils 22 etwa gleich gross wie die in die dritte Richtung des ersten Klemmteils 22 gerichtete Komponente der fünften Richtung des ersten Klemmteils 22, während die in die zweite Richtung des zweiten Klemmteils 23 gerichtete Komponente der fünften Richtung des zweiten Klemmteils 23 etwa gleich gross wie die in die dritte Richtung des zweiten Klemmteils 23 gerichtete Komponente der fünften Richtung des zweiten Klemmteils 23 ist. Dadurch ist die zweite Vorsprunganordnung 29 des ersten Klemmteils 22 auf einer in die vierte Richtung des ersten Klemmteils 22 liegenden Hälfte des ersten Klemmteils 22 angeordnet und ist die zweite Vorsprunganordnung 30 des zweiten Klemmteils 23 auf einer in die zweite Richtung des zweiten Klemmteils 23 liegenden Hälfte des zweiten Klemmteils 23 angeordnet.

Dieser Anordnung der ersten Vorsprunganordnungen 27, 28 und der zweiten Vorsprunganordnungen 29, 30 führt dazu, dass, wenn die zwei zu verbindenden Elemente 100, 200 mit ihren Nuten 101, 201 parallel zueinander ausgerichtet und mit ihren Nuten 101, 202 sich gegenüberliegend in Kontakt gebracht sind, die Kopplungseinrichtung 21 im zusammengesetzten Zustand mit ihrer Längsachse parallel zu den Nuten 101, 201 ausgerichtet in den durch die sich gegenüberliegenden Nuten 101, 201 gebildeten Raum eingeführt ist und durch die Spanneinrichtung 24 die zwei Klemmteile 22, 23 entlang der Längsachse aufeinander zu gespannt werden, aufgrund des Zusammenwirkens der Wirkflächen 25, 26 das erste Klemmteil 22 und das zweite Klemmteil 23 relativ zueinander in eine Richtung quer zur Längsachse der Kopplungseinrichtung 21 gedrückt werden, sodass die am ersten Klemmteil 22 angeordnete erste Vorsprunganordnung 27 und die am zweiten Klemmteil 23 angeordnete erste Vorsprunganordnung 28 zueinander hin gedrückt werden und an den Hinterschnitten 102a, 202a der Nuten 101, 201 anstehen, welche Hinterschnitte 102a, 202a die am ersten Klemmteil 22 angeordnete erste Vorsprunganordnung 27 und die am zweiten Klemmteil 23 angeordnete erste Vorsprunganordnung 28 hintergreifen. Sobald dabei die am ersten Klemmteil 22 angeordnete erste Vorsprunganordnung 27 und die am zweiten Klemmteil 23 angeordnete erste Vorsprunganordnung 28 am jeweiligen Hinterschnitt 102a, 202a anstehen, beginnen sich beim weiteren Spannen der Spanneinrichtung 23 der erste Klemmteil 22 und der zweite Klemmteil 23 um ihre Längsrichtungen relativ zueinander zu verdrehen, bis auch die am ersten Klemmteil 22 angeordnete zweite Vorsprunganordnung 29 und die am zweiten Klemmteil 23 angeordnete zweite Vorsprunganordnung 30 an den Hinterschnitten 202b, 102b anstehen, welche Hinterschnitte 202b, 102b die am ersten Klemmteil 22 angeordnete zweite Vorsprunganordnung 29 und die am zweiten Klemmteil 23 angeordnete zweite Vorsprunganordnung 30 hintergreifen. Somit werden beim Spannen der Spanneinrichtung 24 aufgrund des Zusammenwirkens der Wirkflächen 25, 26 das erste Klemmteil 22 und das zweite Klemmteil 23 relativ zueinander in die Richtung quer zur Längsachse der Kopplungseinrichtung 21 gedrückt und zudem werden, aufgrund des Anstehens der ersten Vorsprunganordnungen 27, 28 an den jeweiligen von ihnen hintergriffenen Hinterschnitten 102a, 202a, das erste Klemmteil 22 und das zweite Klemmteil 23 um ihre Längsrichtungen relativ zueinander verdreht. Dieses Verdrehen führt dazu, dass letztlich nicht nur die am ersten Klemmteil 22 angeordnete erste Vorsprunganordnung 27 und die am zweiten Klemmteil 23 angeordnete erste Vorsprunganordnung 28 zueinander hin gedrückt werden, sondern dass letztlich auch die am ersten Klemmteil 22 angeordnete zweite Vorsprunganordnung 29 und die am zweiten Klemmteil 23 angeordnete zweite Vorsprunganordnung 30 zueinander hin gedrückt werden. Entsprechend können dadurch die zwei zu verbindenden Elemente 100, 200 durch die Kopplungseinrichtung 21 gleichmässig zueinander hin gezogen werden, wenn durch die Spanneinrichtung 24 die zwei Klemmteile 22, 23 entlang der Längsachse aufeinander zu gespannt werden. Entsprechend wird dadurch mit der Kopplungseinrichtung 21 ein sehr gleichmässiges und damit stabiles Verbinden der zwei zu verbindenden Elemente 100, 200 ermöglicht. Zusätzlich dazu wird aber auch der Vorteil erreicht, dass eine Grösse und Dimensionierung der Kopplungseinrichtung 21 weniger genau an die Grösse der beidseitig mit Hinterschnitten 102a, 102b, 202a, 202b hinterschnittenen Nuten 100, 200 angepasst sein muss, um die zwei zu verbindenden Elemente 100, 200 optimal verbinden zu können. Dadurch kann die Kopplungseinrichtung 21 vielfältiger eingesetzt werden.

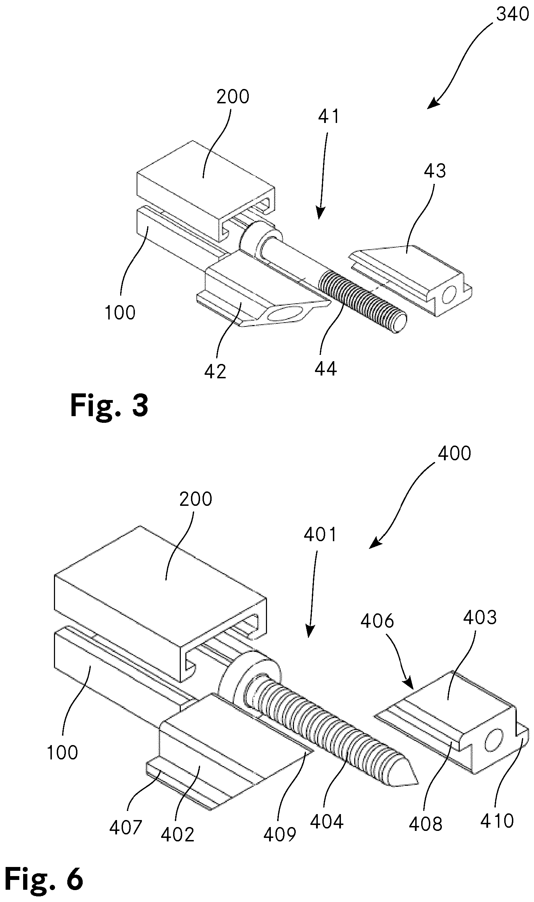

Die Figur 3 zeigt eine schematische Explosionsdarstellung einer weiteren Anordnung 340 mit den zwei zu verbindenden Elementen 100, 200 mit einer weiteren erfindungsgemässen Kopplungseinrichtung 41 zum Verbinden der zwei zu verbindenden Elemente 100, 200. Diese weitere Kopplungseinrichtung 41 ist praktisch identisch zu der in den Figuren 2a, 2b und 2c gezeigten Kopplungseinrichtung 21. Im Gegensatz zur in den Figuren 2a, 2b und 2c gezeigten Kopplungseinrichtung 21 sind in der in Figur 3 gezeigten Kopplungseinrichtung 41 jedoch die zwei Klemmteile 42, 43 nicht aus Kunststoff, sondern aus Aluminium gefertigt. Dabei weist die Ausnehmung im zweiten Klemmteil 43, in welches die Schraube der Spanneinrichtung 44 zum aufeinander zu Spannen der zwei Klemmteile 42, 43 im Wesentlichen entlang der Längsachse der I<opplungs-einrichtung 41 geschraubt wird, ein Innengewinde auf. Entsprechend weist auch die Schraube der Spanneinrichtung 44 kein selbstschneidendes Gewinde auf.

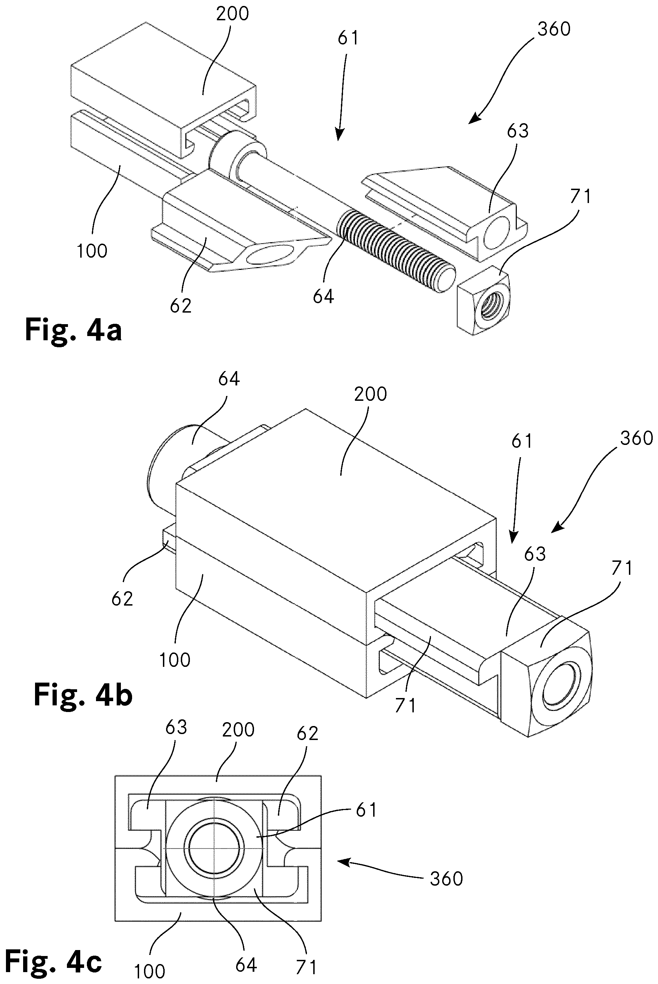

Die Figuren 4a, 4b und 4c zeigen je eine schematische Darstellung einer weiteren Anordnung 360 mit den zwei zu verbindenden Elementen 100, 200 mit einer weiteren erfindungsgemässen Kopplungseinrichtung 61 zum Verbinden der zwei zu verbindenden Elemente 100, 200. Diese weitere Kopplungseinrichtung 61 ist praktisch identisch zu den in den Figuren 2a, 2b und 2c und 3 gezeigten I<opplungseinrichtungen 21, 41. Im Gegensatz zur in den Figuren 2a, 2b und 2c gezeigten Kopplungseinrichtung 21 sind in der in den Figuren 4a, 4b und 4c gezeigten Kopplungseinrichtung 61 die zwei Klemmteile 62, 63 nicht aus Kunststoff, sondern wie bei der in der Figur 3 gezeigten Kopplungseinrichtung 41 aus Aluminium gefertigt. Dabei weist in der in den Figuren 4a, 4b und 4c gezeigten Kopplungseinrichtung 61 jedoch sowohl die Ausnehmung im ersten Klemmteil 62 als auch die Ausnehmung im zweiten Klemmteil 63 einen Durchmesser auf, welcher grösser als der Durchmesser der Schraube der Spanneinrichtung 64 ist. Wenn somit die Schraube der Spanneinrichtung 64 durch die Ausnehmung im ersten Klemmteil 62 und die Ausnehmung im zweiten Klemmteil 63 geführt ist, können sowohl das erste Klemmteil 62 als auch des zweite Klemmteil 63 etwas quer zur Schraube bewegt werden. Um mit der Spanneinrichtung 64 dennoch die zwei Klemmteile 62, 63 im Wesentlichen entlang der Längsachse der I<opplungs-einrichtung 61 aufeinander spannen zu können, weist die Spanneinrichtung 64 eine zur Schraube passende Mutter 71 auf. Diese Mutter 71 weist aussen ein Vierkantprofil auf, um sich auf der Innenseite der Nuten 101, 201 abzustützen. Im zusammengesetzten Zustand der Kopplungseinrichtung 61, ist die Schraube durch die Ausnehmungen in den zwei Klemmelementen 62, 63 geführt und anschliessend mit der Mutter 71 verschraubt. Da die Mutter 71 mit ihren Aussenkanten auf der Innenseite der Nuten 101, 201 abgestützt ist, kann die Schraube zum Spannen der Spanneinrichtung 64 gedreht werden, während die Mutter 71 nicht mitdreht, da sie an den Nuten 101, 201 aufgrund dieses Abstützens an einem Mitdrehen gehindert ist.

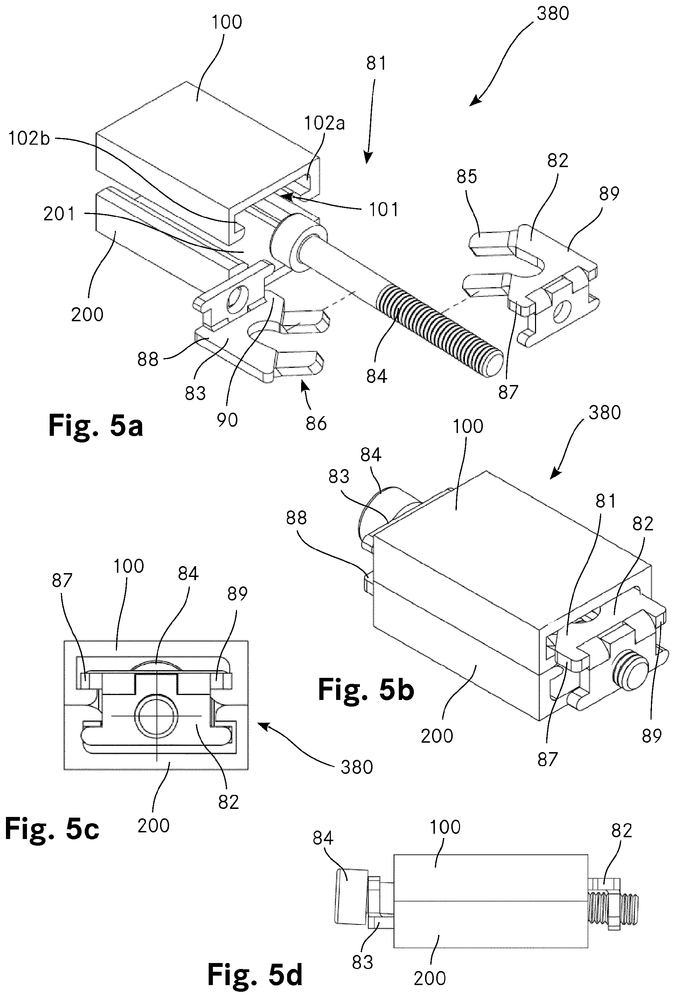

Die Figuren 5a, 5b, 5c und 5d zeigen je eine schematische Darstellung einer weiteren Anordnung 380 mit den zwei zu verbindenden Elementen 100, 200 mit einer weiteren erfindungsgemässen Kopplungseinrichtung 81 zum Verbinden der zwei zu verbindenden Elemente 100, 200. Diese weitere Kopplungseinrichtung 81 ist in vielen Aspekten gleich konstruiert wie die in den Figuren 1a, 1b und 1c gezeigte Kopplungseinrichtung 1. Analog zu den Figuren 1a und 1b ist in der Figur 5a eine Schrägansicht einer Explosionsdarstellung der Kopplungseinrichtung 81 und der zwei Elemente 100, 200 gezeigt, während in der Figur 5b eine Schrägansicht aus der gleichen Perspektive gezeigt ist, wobei die zwei zu verbindenden Elemente 100, 200 durch die Kopplungseinrichtung 81 miteinander verbunden dargestellt sind. In Figur 5c ist analog zur Figur 1c eine Aufsicht auf die Anordnung 380 mit der Kopplungseinrichtung 81 und den zwei zu verbindenden Elementen 100, 200 gezeigt, in welcher Ansicht die Blickrichtung entlang der Längsachse der Kopplungseinrichtung 81 verläuft. Dabei sind die zwei zu verbindenden Elemente 100, 200 durch die Kopplungseinrichtung 81 miteinander verbunden dargestellt. In der Figur 5d ist zusätzlich eine Seitenansicht auf die Anordnung 380 mit der Kopplungseinrichtung 81 und den zwei zu verbindenden Elementen 100, 200 gezeigt, in welcher Ansicht die Blickrichtung senkrecht zur Längsachse der Kopplungseinrichtung 81 verläuft bzw. in welcher die Längsachse der Kopplungseinrichtung 81 horizontal in der Darstellungsebene verläuft.

Im Gegensatz zu den Figuren 1a und 1b sowie zu den Figuren 2a, 2b sowie 4a und 4b sind zudem in den Figuren 5a und 5b die Richtungen, welche zu den zwei Klemmteilen 82, 83 definiert sind, vertauscht dargestellt. So sind in der der Darstellung in den Figuren 5a und 5b die zwei Klemmteile 82, 83 derart ausgerichtet dargestellt, dass bei beiden Klemmteilen 82, 83 die Längsrichtung von links oben in der Darstellung nach rechts unten in der Darstellung verläuft, dass bei beiden Klemmteilen 82, 83 die erste Richtung in der Darstellung von rechts oben nach links unten zeigt, während die zweite Richtung in der Darstellung von unten nach oben zeigt. Entsprechend sind in den Figuren 5a und 5b die zwei Klemmteile 82, 83 derart ausgerichtet dargestellt, dass bei beiden Klemmteilen 82, 83 die dritte Richtung in der Darstellung von links unten nach rechts oben zeigt, während die vierte Richtung in der Darstellung von oben nach unten zeigt.

Die in den Figuren 5a, 5b, 5c und 5d gezeigte Kopplungseinrichtung 81 ist, wie erwähnt, in vielen Aspekten gleich konstruiert wie die in den Figuren 1a, 1b und 1c gezeigte Kopplungseinrichtung 1. Insbesondere ist die Anordnung der ersten Vorsprunganordnungen 87, 88 und der zweiten Vorsprunganordnungen 89, 90 am ersten Klemmteil 82 und am zweiten Klemmteil 83 gleich wie bei der in den Figuren 1a, 1b und 1c gezeigten Kopplungseinrichtung 1. Im Gegensatz zur in den Figuren 1a, 1b und 1c gezeigten Kopplungseinrichtung 1 sind in der in den Figuren 5a, 5b, 5c und 5d gezeigten Kopplungseinrichtung 81 die zwei Klemmteile 82, 83 jedoch nicht aus Kunststoff, sondern aus gebogenem Stahlblech gefertigt. Entsprechend sind die zwei Klemmteile 82, 83 auch nicht als Vollkörperteile ausgebildet. Bei beiden Klemmteilen 82, 83 ist ein mittlerer Bereich des Stahlblechs ausreichend breit geschnitten, damit die beiden seitlichen, entlang der Längsrichtung des jeweiligen Klemmteils 82, 83 verlaufenden Ränder zugleich die jeweilige erste Vorsprunganordnung 87, 88 bzw. die jeweilige zweite Vorsprunganordnung 89, 90 bilden. In Längsrichtung des jeweiligen Klemmteils 82, 83 ist jeweils an den mittleren Bereich des Stahlblechs anschliessend an einem ersten Ende ein etwas schmalerer Abschnitt des Stahlblechs als Wirkflächenbereich und an einem anderen Ende ein Abschnitt des Stahlblechs als Endbereich abgebogen. Dabei ist der Wirkflächenbereich jeweils derart relativ zum mittleren Bereich des Stahlblechs abgebogen, dass er die jeweilige Wirkfläche 85, 86 bildet, welche eine Ausrichtung wie die Wirkflächen 5, 6 des jeweiligen Klemmteils 2, 3 der in den Figuren 1a, 1b und 1c gezeigten Kopplungseinrichtung 1 aufweist. Die Endbereiche des Stahlblechs sind bei beiden Klemmteilen 82, 83 rechtwinklig zum mittleren Bereich des jeweiligen Stahlblechs gebogen.

Bei beiden Klemmteilen 82, 83 weist der jeweiligen Wirkflächenbereich mittig einen Ausschnitt auf. Ausserdem weisen die beiden Endbereiche je eine Ausnehmung auf. Diese Ausschnitte bzw. Ausnehmungen dienen als Durchführung der als Schraube ausgebildeten Spanneinrichtung 84. Im Gegensatz zur Schraube der Spanneinrichtung 4 der in den Figuren 1a, 1b und 1c gezeigten Kopplungseinrichtung 1 ist jedoch die Schraube der Spanneinrichtung 84 als Metallschraube ausgeführt. Zudem weist die Ausnehmung im Endbereich des Stahlblechs des ersten Klemmteils 82 ein Innengewinde auf, damit die Schraube der Spanneinrichtung 84 zum aufeinander zu Spannen der zwei Klemmteile 82, 83 im Wesentlichen entlang einer Längsachse der I<opplungs-einrichtung 81 in das zweite Klemmteil 82 geschraubt werden kann.

Die Figur 6 zeigt eine schematische Explosionsdarstellung einer weiteren Anordnung 400 mit den zwei zu verbindenden Elementen 100, 200 mit einer weiteren, nicht erfindungsgemässen Kopplungseinrichtung 401 zum Verbinden der zwei zu verbindenden Elemente 100, 200. Diese weitere Kopplungseinrichtung 401 entspricht der vorgehend erwähnten zweiten Erfindung. Sie ist praktisch identisch zu der in den Figuren 2a, 2b und 2c gezeigten Kopplungseinrichtung 21. Auch entsprechen in der Darstellung in der Figur 6 die Richtungen, welche zum ersten Klemmteil 402 und zum zweiten Klemmteil 403 definiert sind, der zum ersten und zweiten Klemmteil 22, 23 definierten Richtungen in den Darstellungen der Figuren 2a und 2b.

Im Gegensatz zur in den Figuren 2a, 2b und 2c gezeigten Kopplungseinrichtung 21 sind in der in Figur 6 gezeigten Kopplungseinrichtung 401 jedoch die Wirkflächen 405, 406 der zwei Klemmteile 402, 403 anders ausgerichtet. So ist die Wirkfläche 405 des ersten Klemmteils 402 zur Längsrichtung des ersten Klemmteils 402, wobei ein senkrecht auf die Wirkfläche 405 des ersten Klemmteils 402 stehender Normalenvektor eine in die zweite Richtung des ersten Klemmteils 402 zeigende Komponente aufweist, aber weder eine in die erste Richtung noch eine dritte Richtung des ersten Klemmteils 402 zeigende Komponente aufweist. Die Wirkfläche 406 des zweiten Klemmteils 403 hingegen ist Längsrichtung des zweiten Klemmteils 403 geneigt, wobei ein senkrecht auf die Wirkfläche 406 des zweiten Klemmteils 406 stehender Normalenvektor eine in die vierte Richtung des zweiten Klemmteils 403 zeigende Komponente, aber weder eine in die erste Richtung noch eine dritte Richtung des zweiten Klemmteils 403 zeigende Komponente aufweist. Die ersten und zweiten Vorsprunganordnungen 407, 408, 409, 410 der zwei Klemmteile 402, 403 sind jedoch wie bei den zwei Klemmteilen 22, 23 der in den Figuren 2a, 2b und 2c gezeigten Kopplungseinrichtung 21 angeordnet. Auch weist die Spannanordnung 404 der in Figur 6 gezeigten Kopplungseinrichtung 400 die gleiche Schraube wie die in den Figuren 2a, 2b und 2c gezeigten Kopplungseinrichtung 21 auf.

In einer Variation der in Figur 6 gezeigten Kopplungseinrichtung 401 können die zwei Klemmteile auch aus gebogenem Stahlblech gefertigt sein, wobei die Wirkflächen der zwei Klemmteile aber wie in der in Figur 6 gezeigten Kopplungseinrichtung 401 ausgerichtet sind.

Die Erfindung ist nicht auf die im Rahmen der Figuren 1a bis 5d beschriebenen Ausführungsformen beschränkt. Weitere Varianten und Variationen sind dem Fachmann unmittelbar zugänglich, solange sie in den Unfang der Ansprüche fallen.

Zusammenfassend ist festzustellen, dass eine dem eingangs genannten technischen Gebiet zugehörende Kopplungseinrichtung geschaffen wird, welche beim Verbinden der zwei zu verbindenden Elemente auf einfache und zuverlässige Art reproduzierbar eine korrekte Positionierung der zwei zu verbindenden Elemente in eine Richtung quer zu den Nuten in den zwei zu verbindenden Elementen ermöglicht.

## Patentansprüche

1. Kopplungseinrichtung (1, 21, 41, 61, 81) zum Verbinden von zwei zu verbindenden Elementen (100, 200), welche zwei Elemente (100, 200) je beidseitig eine beidseitig mit je mindestens einem Hinterschnitt (102a, 102b, 202a, 202b) hinterschnittene und somit mit mindestens zwei Hinterschnitten (102a, 102b, 202a, 202b) hinterschnittene Nut (101, 201), aufweisen,
a) wobei die Kopplungseinrichtung (1, 21, 41, 61, 81) ein erstes Klemmteil (2, 22, 42, 62, 82) und ein zweites Klemmteil (3, 23, 43, 63, 83) und somit zwei Klemmteile (2, 3, 22, 23, 42, 43, 62, 63, 82, 83) umfasst,
- wobei zu beiden der zwei Klemmteilen (2, 3, 22, 23, 42, 43, 62, 63, 82, 83)je eine Längsrichtung, eine senkrecht zur Längsrichtung ausgerichtete erste Richtung, eine sowohl senkrecht zur Längsrichtung als auch senkrecht zur ersten Richtung ausgerichtete zweite Richtung, eine zur ersten Richtung entgegengesetzt ausgerichtete dritte Richtung und eine zur zweiten Richtung entgegengesetzt ausgerichtete vierte Richtung definiert ist,
- wobei das erste Klemmteil (2, 22, 42, 62, 82) eine Wirkfläche (5, 85) aufweist, welche Wirkfläche (5, 85) zur Längsrichtung des ersten Klemmteils (2, 22, 42, 62, 82) geneigt ist, und das zweite Klemmteil (3, 23, 43, 63, 83) eine Wirkfläche (6, 86) aufweist, welche Wirkfläche (6, 86) zur Längsrichtung des zweiten Klemmteils (3, 23, 43, 63, 83) geneigt ist,
- wobei das erste Klemmteil (2, 22, 42, 62, 82) eine in die erste Richtung des ersten Klemmteils (2, 22, 42, 62, 82) vorstehende erste Vorsprunganordnung (7, 27, 87) zum Hintergreifen eines ersten des wenigstens einen Hinterschnitts (102a) der Nut (101) in einem ersten der zwei zu verbindenden Elemente (100) aufweist und das zweite Klemmteil (3, 23, 43, 63, 83) eine in die erste Richtung des zweiten Klemmteils (3, 23, 43, 63, 83) vorstehende erste Vorsprunganordnung (8, 28, 88) zum Hintergreifen eines ersten des wenigstens einen Hinterschnitts (202a) der Nut (201) in einem zweiten der zwei zu verbindenden Elemente (200) aufweist,
b) wobei die Kopplungseinrichtung (1, 21, 41, 61, 81) eine Spanneinrichtung (4, 24, 44, 64, 84) zum aufeinander zu Spannen der zwei Klemmteile (2, 3, 22, 23, 42, 43, 62, 63, 82, 83) im Wesentlichen entlang einer Längsachse der Kopplungs-einrichtung (1, 21, 41, 61, 81) umfasst,
wobei in einem zusammengesetzten Zustand der Kopplungseinrichtung (1, 21, 41, 61, 81) die zwei Klemmteile (2, 3, 22, 23, 42, 43, 62, 63, 82, 83) je mit ihrer Längsrichtung im Wesentlichen entlang der Längsachse der Kopplungseinrichtung (1, 21, 41, 61, 81) ausgerichtet sind, während die erste Richtung des ersten Klemmteils (2, 22, 42, 62, 82) und die erste Richtung des zweiten Klemmteils (3, 23, 43, 63, 83) im Wesentlichen parallel zueinander ausgerichtet sind und die zweite Richtung des ersten Klemmteils (2, 22, 42, 62, 82) und die zweite Richtung des zweiten Klemmteils (3, 23, 43, 63, 83) im Wesentlichen parallel zueinander ausgerichtet sind, und die zwei Klemmteile (2, 3, 22, 23, 42, 43, 62, 63, 82, 83) je mit ihren Wirkflächen (5, 6, 85, 86) einander zugewandt hintereinander entlang der Längsachse angeordnet und durch die Spanneinrichtung (4, 24, 44, 64, 84) entlang der Längsachse aufeinander zu spannbar oder aufeinander zu gespannt sind, wobei, wenn durch die Spanneinrichtung (4, 24, 44, 64, 84) die zwei Klemmteile (2, 3, 22, 23, 42, 43, 62, 63, 82, 83) entlang der Längsachse aufeinander zu gespannt werden, aufgrund des Zusammenwirkens der Wirkflächen (5, 6, 85, 86) das erste Klemmteil (2, 22, 42, 62, 82) und das zweite Klemmteil (3, 23, 43, 63, 83) relativ zueinander in eine Richtung quer zur Längsachse der Kopplungseinrichtung (1, 21, 41, 61, 81) gedrückt werden, sodass die am ersten Klemmteil (2, 22, 42, 62, 82) angeordnete erste Vorsprunganordnung (7, 27, 87) und die am zweiten Klemmteil (3, 23, 43, 63, 83) angeordnete erste Vorsprunganordnung (8, 28, 88) zueinander hin gedrückt werden, wobei,
- ein senkrecht auf die Wirkfläche (5, 85) des ersten Klemmteils (2, 22, 42, 62, 82) stehender Normalenvektor sowohl eine in die erste Richtung des ersten Klemmteils (2, 22, 42, 62, 82) zeigende Komponente als auch eine in die zweite Richtung des ersten Klemmteils (2, 22, 42, 62, 82) zeigende Komponente aufweist, und dass
- ein senkrecht auf die Wirkfläche (6, 86) des zweiten Klemmteils (3, 23, 43, 63, 83) stehender Normalenvektor sowohl eine in die dritte Richtung des zweiten Klemmteils (3, 23, 43, 63, 83) zeigende Komponente als auch eine in die vierte Richtung des zweiten Klemmteils (3, 23, 43, 63, 83) zeigende Komponente aufweist,
wobei das erste Klemmteil (2, 22, 42, 62, 82) eine in die dritte Richtung des ersten Klemmteils (2, 22, 42, 62, 82) vorstehende zweite Vorsprunganordnung (9, 29, 89) aufweist und das zweite Klemmteil (3, 23, 43, 63, 83) eine in die dritte Richtung des zweiten Klemmteils (3, 23, 43, 63, 83) vorstehende zweite Vorsprunganordnung (10, 30, 90) aufweist, wobei entweder
c) die zweite Vorsprunganordnung (9, 89) des ersten Klemmteils (2, 82) zum Hintergreifen eines zweiten der mindestens zwei Hinterschnitte (102b) der Nut (101) im ersten der zwei zu verbindenden Elemente (100) dient, während die zweite Vorsprunganordnung (10, 90) des zweiten Klemmteils (200) zum Hintergreifen eines zweiten der mindestens zwei Hinterschnitte (202b) der Nut (201) im zweiten der zwei zu verbindenden Elemente (200) dient,
oder
d) die zweite Vorsprunganordnung (29) des ersten Klemmteils (22, 42, 62) zum Hintergreifen eines zweiten der mindestens zwei Hinterschnitte (202b) der Nut (201) im zweiten der zwei zu verbindenden Elemente (200) dient, während die zweite Vorsprunganordnung (30) des zweiten Klemmteils (23, 43, 63) zum Hintergreifen eines zweiten der mindestens zwei Hinterschnitte (102b) der Nut (101) im ersten der zwei zu verbindenden Elemente (100) dient.

2. Kopplungseinrichtung (1, 21, 41, 61, 81) nach Anspruch 1, **dadurch gekennzeichnet, dass**
- beim ersten Klemmteil (2, 22, 42, 62, 82) ein in einer durch die Längsrichtung und die erste Richtung aufgespannten Ebene gemessener Winkel zwischen der Wirkfläche (5, 85) und der ersten Richtung mindestens 30° beträgt, dass
- beim ersten Klemmteil (2, 22, 42, 62, 82) ein in einer durch die Längsrichtung und die zweite Richtung aufgespannten Ebene gemessener Winkel zwischen der Wirkfläche (5, 85) und der zweiten Richtung mindestens 30° beträgt, dass
- beim zweiten Klemmteil (3, 23, 43, 63, 83) ein in einer durch die Längsrichtung und die dritte Richtung aufgespannten Ebene gemessener Winkel zwischen der Wirkfläche (6, 86) und der dritten Richtung mindestens 30° beträgt, und dass
- beim zweiten Klemmteil (3, 23, 43, 63, 83) ein in einer durch die Längsrichtung und die vierte Richtung aufgespannten Ebene gemessener Winkel zwischen der Wirkfläche (6, 86) und der vierten Richtung mindestens 30° beträgt.

3. Kopplungseinrichtung (1, 21, 41, 61, 81) nach Anspruch 1 oder 2, **dadurch gekennzeichnet, dass**
- beim ersten Klemmteil (2, 22, 42, 62, 82) ein in einer durch die Längsrichtung und die erste Richtung aufgespannten Ebene gemessener Winkel zwischen der Wirkfläche (5, 85) und der ersten Richtung höchstens 60° beträgt, dass
- beim ersten Klemmteil (2, 22, 42, 62, 82) ein in einer durch die Längsrichtung und die zweite Richtung aufgespannten Ebene gemessener Winkel zwischen der Wirkfläche (5, 85) und der zweiten Richtung höchstens 60° beträgt, dass
- beim zweiten Klemmteil (3, 23, 43, 63, 83) ein in einer durch die Längsrichtung und die dritte Richtung aufgespannten Ebene gemessener Winkel zwischen der Wirkfläche (6, 86) und der dritten Richtung höchstens 60° beträgt, und dass
- beim zweiten Klemmteil (3, 23, 43, 63, 83) ein in einer durch die Längsrichtung und die vierte Richtung aufgespannten Ebene gemessener Winkel zwischen der Wirkfläche (6, 86) und der vierten Richtung höchstens 60° beträgt.

4. Kopplungseinrichtung (1, 21, 41, 61, 81) nach einem der Ansprüche 1 bis 3, **dadurch gekennzeichnet, dass** die erste Vorsprunganordnung (7, 27, 87) des ersten Klemmteils (2, 22, 42, 62, 82) auf einer in die zweite Richtung des ersten Klemmteils (2, 22, 42, 62, 82) liegenden Hälfte des ersten Klemmteils (2, 22, 42, 62, 82) angeordnet ist und dass die erste Vorsprunganordnung (8, 28, 88) des zweiten Klemmteils (3, 23, 43, 63, 83) auf einer in die vierte Richtung des zweiten Klemmteils (3, 23, 43, 63, 83) liegenden Hälfte des zweiten Klemmteils (3, 23, 43, 63, 83) angeordnet ist.

5. Kopplungseinrichtung (1, 21, 41, 61, 81) nach einem der Ansprüche 1 bis 4, **dadurch gekennzeichnet, dass** die erste Vorsprunganordnung (7, 27, 87) des ersten Klemmteils (2, 22, 42, 62, 82) in Längsrichtung des ersten Klemmteils (2) betrachtet in einem Bereich eines der Wirkfläche (5, 85) des ersten Klemmteils (2, 22, 42, 62, 82) gegenüberliegenden, ersten Endes des ersten Klemmteils (2, 22, 42, 62, 82) einen Vorsprung zum Hintergreifen des ersten des wenigstens einen Hinterschnitts (102a) der Nut (101) im ersten der zwei zu verbindenden Elemente (100) bildet und dass die erste Vorsprunganordnung (8, 28, 88) des zweiten Klemmteils (3, 23, 43, 63, 83) in Längsrichtung des zweiten Klemmteils (3, 23, 43, 63, 83) betrachtet in einem Bereich eines der Wirkfläche (6, 86) des zweiten Klemmteils (3, 23, 43, 63, 83) gegenüberliegenden, ersten Endes des zweiten Klemmteils (3, 23, 43, 63, 83) einen Vorsprung zum Hintergreifen des ersten des wenigstens einen Hinterschnitts (202a) der Nut (201) im zweiten der zwei zu verbindenden Elemente (200) bildet.

6. Kopplungseinrichtung (1, 81) nach einem der Ansprüche 1 bis 5, **dadurch gekennzeichnet, dass** die zweite Vorsprunganordnung (9, 89) des ersten Klemmteils (2, 82) zum Hintergreifen des zweiten der mindestens zwei Hinterschnitte (102b) der Nut (101) im ersten der zwei zu verbindenden Elemente (100) dient, während die zweite Vorsprunganordnung (10, 90) des zweiten Klemmteils (3, 83) zum Hintergreifen des zweiten der mindestens zwei Hinterschnitte (202b) der Nut (201) im zweiten der zwei zu verbindenden Elemente (200) dient,
wobei die zweite Vorsprunganordnung (9, 89) des ersten Klemmteils (2, 82) ausgehend von der ersten Vorsprunganordnung (7, 87) des ersten Klemmteils (2, 82) in die dritte Richtung des ersten Klemmteils (2, 82) am ersten Klemmteil (2, 82) angeordnet ist und wobei die zweite Vorsprunganordnung (10, 90) des zweiten Klemmteils (3, 83) ausgehend von der ersten Vorsprunganordnung (9, 89) des zweiten Klemmteils (3, 83) in die dritte Richtung des zweiten Klemmteils (3, 83) am zweiten Klemmteil (3, 83) angeordnet ist.

7. Kopplungseinrichtung (1, 81) nach Anspruch 6, **dadurch gekennzeichnet, dass** die zweite Vorsprunganordnung (9, 89) des ersten Klemmteils (2, 82) auf der in die zweite Richtung des ersten Klemmteils (2, 82) liegenden Hälfte des ersten Klemmteils (2, 82) angeordnet ist und dass die zweite Vorsprunganordnung (10, 90) des zweiten Klemmteils (3, 83) auf der in die vierte Richtung des zweiten Klemmteils (3, 83) liegenden Hälfte des zweiten Klemmteils (3, 83) angeordnet ist.

8. Kopplungseinrichtung (22, 42, 62) nach einem der Ansprüche 1 bis 5, **dadurch gekennzeichnet, dass** die zweite Vorsprunganordnung (28) des ersten Klemmteils (22, 42, 62) zum Hintergreifen des zweiten der mindestens zwei Hinterschnitte (202b) der Nut (202) im zweiten der zwei zu verbindenden Elemente (200) dient, während die zweite Vorsprunganordnung (30) des zweiten Klemmteils (23, 43, 63) zum Hintergreifen des zweiten der mindestens zwei Hinterschnitte (102b) der Nut (101) im ersten der zwei zu verbindenden Elemente (100) dient,
wobei die zweite Vorsprunganordnung (28) des ersten Klemmteils (22, 42, 62) ausgehend von der ersten Vorsprunganordnung (27) des ersten Klemmteils (22, 42, 62) in eine fünfte Richtung des ersten Klemmteils (22, 42, 62) am ersten Klemmteil (22, 42, 62) angeordnet ist, welche fünfte Richtung des ersten Klemmteils (22, 42, 62) eine Komponente in die vierte Richtung des ersten Klemmteils (22, 42, 62) und eine Komponente in die dritte Richtung des ersten Klemmteils (22, 42, 62) aufweist,
wobei die zweite Vorsprunganordnung (30) des zweiten Klemmteils (23, 43, 63) ausgehend von der ersten Vorsprunganordnung (28) des zweiten Klemmteils (23, 43, 63) in eine fünfte Richtung des zweiten Klemmteils (23, 43, 63) am zweiten Klemmteil (23, 43, 63) angeordnet ist, welche fünfte Richtung des zweiten Klemmteils (23, 43, 63) eine Komponente in die zweite Richtung des zweiten Klemmteils (23, 43, 63) und eine Komponente in die dritte Richtung des zweiten Klemmteils (23, 43, 63) aufweist.

9. Kopplungseinrichtung (21, 41, 61) nach Anspruch 8, **dadurch gekennzeichnet, dass** die zweite Vorsprunganordnung (28) des ersten Klemmteils (22, 42, 62) auf einer in die vierte Richtung des ersten Klemmteils (22, 42, 62) liegenden Hälfte des ersten Klemmteils (22, 42, 62) angeordnet ist und dass die zweite Vorsprunganordnung (30) des zweiten Klemmteils (23, 43, 63) auf einer in die zweite Richtung des zweiten Klemmteils (23, 43, 63) liegenden Hälfte des zweiten Klemmteils (23, 43, 63) angeordnet ist.

10. Kopplungseinrichtung (21, 41, 61) nach Anspruch 8 oder 9, **dadurch gekennzeichnet, dass** die in die vierte Richtung des ersten Klemmteils (22, 42, 62) gerichtete Komponente der fünften Richtung des ersten Klemmteils (22, 42, 62) etwa gleich gross wie die in die dritte Richtung des ersten Klemmteils (22, 42, 62) gerichtete Komponente der fünften Richtung des ersten Klemmteils (22, 42, 62) ist,
wobei die in die zweite Richtung des zweiten Klemmteils (23, 43, 63) gerichtete Komponente der fünften Richtung des zweiten Klemmteils (23, 43, 63) etwa gleich gross wie die in die dritte Richtung des zweiten Klemmteils (23, 43, 63) gerichtete Komponente der fünften Richtung des zweiten Klemmteils (23, 43, 63) ist.

11. Kopplungseinrichtung (1, 21, 41, 61, 81) nach einem der Ansprüche 1 bis 10, **dadurch gekennzeichnet, dass** die zwei Klemmteile (2, 3, 22, 23, 42, 43, 62, 63, 82, 83) je aus einem Kunststoff oder einem Metall, insbesondere Aluminium oder Stahl, gefertigt sind.

12. Kopplungseinrichtung (81) nach einem der Ansprüche 1 bis 11, **dadurch gekennzeichnet, dass** die zwei Klemmteile (82, 82) je aus gebogenem Stahlblech gefertigt sind.

13. Kopplungseinrichtung (1, 21, 41, 61, 81) nach einem der Ansprüche 1 bis 12, **dadurch gekennzeichnet, dass** die Spanneinrichtung (4, 24, 44, 64, 84) eine Schraube umfasst.

14. Anordnung (300, 320, 340, 360, 380), welche zwei zu verbindende Elemente (100, 200) umfasst, welche Elemente (100, 200) je eine mit wenigstens einem Hinterschnitt (102a, 102b, 202a, 202b) hinterschnittene Nut (101, 201), insbesondere eine beidseitig mit je mindestens einem Hinterschnitt (102a, 102b, 202a, 202b) hinterschnittene und somit mit mindestens zwei Hinterschnitten (102a, 102b, 202a, 202b) hinterschnittene Nut (101, 201), aufweisen, sowie welche Anordnung (300, 320, 340, 360, 380) wenigstens eine Kopplungseinrichtung (1, 21, 41, 61, 81) nach einem der Ansprüche 1 bis 13 umfasst.

## Claims

1. Coupling device (1, 21, 41, 61, 81) for joining two elements (100, 200) to be joined, which two elements (100, 200) each have a notch (101, 201) recessed with at least one recess (102a, 102b, 202a, 202b) on both sides and thus have a notch (101, 201) recessed with at least two recesses (102a, 102b, 202a, 202b),
a) wherein the coupling device (1, 21, 41, 61, 81) comprises a first clamping part (2, 22, 42, 62, 82) and a second clamping part (3, 23, 43, 63, 83) and thus two clamping parts (2, 3, 22, 23, 42, 43, 62, 63, 82, 83),
- wherein each of the two clamping parts (2, 3, 22, 23, 42, 43, 62, 63, 82, 83) each has a longitudinal direction, a first direction perpendicular to the longitudinal direction, a second direction perpendicular to both the longitudinal direction and the first direction, a third direction opposite to the first direction, and a fourth direction opposite to the second direction,
- wherein the first clamping part (2, 22, 42, 62, 82) has an active surface (5, 85), which active surface (5, 85) is inclined towards the longitudinal direction of the first clamping part (2, 22, 42, 62, 82), and the second clamping part (3, 23, 43, 63, 83) has an active surface (6, 86), which active surface (6, 86) is inclined relative to the longitudinal direction of the second clamping part (3, 23, 43, 63, 83),
- wherein the first clamping part (2, 22, 42, 62, 82) has a first protrusion arrangement (7, 27, 87) protruding in the first direction of the first clamping part (2, 22, 42, 62, 82) for engaging behind a first of the at least one recess (102a) of the notch (101) in a first of the two elements (100) to be joined, and the second clamping part (3, 23, 43, 63, 83) has a first protrusion arrangement (8, 28, 88) protruding in the first direction of the second clamping part (3, 23, 43, 63, 83) for engaging a first of the at least one recess (202a) of the notch (201) in a second of the two elements (200) to be joined,
b) wherein the coupling device (1, 21, 41, 61, 81) has a clamping device (4, 24, 44, 64, 84) for clamping the two clamping parts (2, 3, 22, 23, 42, 43, 62, 63, 82, 83) essentially along a longitudinal axis of the coupling device (1, 21, 41, 61, 81),
wherein, in an assembled state of the coupling device (1, 21, 41, 61, 81), the two clamping parts (2, 3, 22, 23, 42, 43, 62, 63, 82, 83) are each aligned with their longitudinal direction substantially along the longitudinal axis of the coupling device (1, 21, 41, 61, 81), while the first direction of the first clamping part (2, 22, 42, 62, 82) and the first direction of the second clamping part (3, 23, 43, 63, 83) are aligned substantially parallel to each other and the second direction of the first clamping part (2, 22, 42, 62, 82) and the second direction of the second clamping part (3, 23, 43, 63, 83) are aligned substantially parallel to each other, and the two clamping parts (2, 3, 22, 23, 42, 43, 62, 63, 82, 83) are each arranged one behind the other along the longitudinal axis with their active surfaces (5, 6, 85, 86) facing each other and can be clamped or are clamped towards each other along the longitudinal axis by the clamping device (4, 24, 44, 64, 84) along the longitudinal axis, wherein, when the two clamping parts (2, 3, 22, 23, 42, 43, 62, 63, 82, 83) are clamped towards each other along the longitudinal axis by the clamping device (4, 24, 44, 85, 86), the first clamping part (2, 22, 42, 62, 82) and the second clamping part (3, 23, 43, 63, 83) are pressed relative to each other in a direction transverse to the longitudinal axis of the coupling device (1, 21, 41, 61, 81) so that the first protrusion arrangement (7, 27, 87) arranged on the first clamping part (2, 22, 42, 62, 82) and the first protrusion arrangement (8, 28, 88) arranged on the second clamping part (3, 23, 43, 63, 83) are pressed towards each other,
wherein
- a normal vector perpendicular to the active surface (5, 85) of the first clamping part (2, 22, 42, 62, 82) has both a component pointing in the first direction of the first clamping part (2, 22, 42, 62, 82) and a component pointing in the second direction of the first clamping part (2, 22, 42, 62, 82), and that
- a normal vector perpendicular to the active surface (6, 86) of the second clamping part (3, 23, 43, 63, 83) has both a component pointing in the third direction of the second clamping part (3, 23, 43, 63, 83) and a component pointing in the fourth direction of the second clamping part (3, 23, 43, 63, 83),
wherein the first clamping part (2, 22, 42, 62, 82) has a second protrusion arrangement (9, 29, 89) protruding in the third direction of the first clamping part (2, 22, 42, 62, 82) and the second clamping part (3, 23, 43, 63, 83) has a second protrusion arrangement (10, 30, 90) projecting in the third direction of the second clamping part (3, 23, 43, 63, 83), wherein either
c) the second protrusion arrangement (9, 89) of the first clamping part (2, 82) serves to engage a second of the at least two recesses (102b) of the notch (101) in the first of the two elements (100) to be joined, while the second protrusion arrangement (10, 90) of the second clamping part (200) serves to engage a second of the at least two recesses (202b) of the notch (201) in the second of the two elements (200) to be joined,
or
d) the second protrusion arrangement (29) of the first clamping part (22, 42, 62) serves to engage behind a second of the at least two recesses (202b) of the notch (201) in the second of the two elements to be joined (200), while the second protrusion arrangement (30) of the second clamping part (23, 43, 63) serves to engage behind a second of the at least two recessses (102b) of the notch (101) in the first of the two elements (100) to be joined.

2. Coupling device (1, 21, 41, 61, 81) according to claim 1, **characterised in that**
- in the first clamping part (2, 22, 42, 62, 82), an angle measured in a plane spanned by the longitudinal direction and the first direction between the active surface (5, 85) and the first direction is at least 30°, that
- in the first clamping part (2, 22, 42, 62, 82), an angle measured in a plane spanned by the longitudinal direction and the second direction between the active surface (5, 85) and the second direction is at least 30°, that
- in the second clamping part (3, 23, 43, 63, 83), an angle measured in a plane spanned by the longitudinal direction and the third direction between the active surface (6, 86) and the third direction is at least 30°, and that
- in the second clamping part (3, 23, 43, 63, 83), an angle measured in a plane spanned by the longitudinal direction and the fourth direction between the active surface (6, 86) and the fourth direction is at least 30°.

3. Coupling device (1, 21, 41, 61, 81) according to claim 1 or 2, **characterised in that**
- in the first clamping part (2, 22, 42, 62, 82), an angle measured in a plane defined by the longitudinal direction and the first direction between the active surface (5, 85) and the first direction is at most 60°, that
- in the first clamping part (2, 22, 42, 62, 82), an angle measured in a plane defined by the longitudinal direction and the second direction between the active surface (5, 85) and the second direction is at most 60°, that
- in the second clamping part (3, 23, 43, 63, 83), an angle measured in a plane defined by the longitudinal direction and the third direction between the active surface (6, 86) and the third direction is at most 60°, and that
- in the second clamping part (3, 23, 43, 63, 83), an angle measured in a plane defined by the longitudinal direction and the fourth direction between the active surface (6, 86) and the fourth direction is at most 60°.

4. Coupling device (1, 21, 41, 61, 81) according to one of claims 1 to 3, **characterised in that** the first protrusion arrangement (7, 27, 87) of the first clamping part (2, 22, 42, 62, 82) is arranged on a half of the first clamping part (2, 22, 42, 62, 82) lying in the second direction of the first clamping part (2, 22, 42, 62, 82) and that the first protrusion arrangement (8, 28, 88) of the second clamping part (3, 23, 43, 63, 83) is arranged on a half of the second clamping part (3, 23, 43, 63, 83) lying in the fourth direction of the second clamping part (3, 23, 43, 63, 83).

5. Coupling device (1, 21, 41, 61, 81) according to one of claims 1 to 4, **characterised in that** the first protrusion arrangement (7, 27, 87) of the first clamping part (2, 22, 42, 62, 82), viewed in the longitudinal direction of the first clamping part (2), in a region of a first end of the first clamping part (2, 22, 42, 62, 82) opposite to the active surface of the first clamping part (2, 22, 42, 62, 82), forms a protrusion for engaging behind the first of the at least one recess (102a) of the notch (101) in the first of the two elements (100) to be joined, and that the first protrusion arrangement (8, 28, 88) of the second clamping part (3, 23, 43, 63, 83), viewed in the longitudinal direction of the second clamping part (3, 23, 43, 63, 83), in a region of a first end of the second clamping part (3, 23, 43, 63, 83) opposite to the active surface of the second clamping part (3, 23, 43, 63, 83), forms a protrusion for engaging behind the first of the at least one recess (202a) of the notch (201) in the second of the two clamping parts (200) to be joined.

6. Coupling device (1, 81) according to one of claims 1 to 5, **characterised in that** the second protrusion arrangement (9, 89) of the first clamping part (2, 82) serves to engage behind the second of the at least two recess (102b) of the notch (101) in the first of the two elements (100) to be joined, while the second protrusion arrangement (10, 90) of the second clamping part (3, 83) serves to engage behind the second of the at least two recess (202b) of the notch (201) in the second of the two elements (200) to be joined,
wherein the second protrusion arrangement (9, 89) of the first clamping part (2, 82) is arranged on the first clamping part (2, 82) starting from the first protrusion arrangement (7, 87) of the first clamping part (2, 82) (2, 82) in the third direction of the first clamping part (2, 82), and wherein the second protrusion arrangement (10, 90) of the second clamping part (3, 83) is arranged starting from the first protrusion arrangement (9, 89) of the second clamping part (3, 83) in the third direction of the second clamping part (3, 83) on the second clamping part (3, 83).

7. Coupling device (1, 81) according to claim 6, **characterised in that** the second protrusion arrangement (9, 89) of the first clamping part (2, 82) is arranged on the half of the first clamping part (2, 82) lying in the second direction of the first clamping part (2, 82) (2, 82) and that the second protrusion arrangement (10, 90) of the second clamping part (3, 83) is arranged on the half of the second clamping part (3, 83) lying in the fourth direction of the second clamping part (3, 83).

8. Coupling device (22, 42, 62) according to one of claims 1 to 5, **characterised in that** the second protrusion arrangement (28) of the first clamping part (22, 42, 62) serves to engage behind the second of the at least two recesses (202b) of the notch (202) in the second of the two elements to be joined (200), while the second protrusion arrangement (30) of the second clamping part (23, 43, 63) serves to engage behind the second of the at least two recesses (102b) of the notch (101) in the first of the two elements (100) to be joined,
wherein the second protrusion arrangement (28) of the first clamping part (22, 42, 62) is arranged on the first clamping part (22, 42, 62) in a fifth direction of the first clamping part (22, 42, 62) (22, 42, 62) starting from the first protrusion arrangement (27) of the first clamping part (22, 42, 62), which fifth direction of the first clamping part (22, 42, 62) has a component in the fourth direction of the first clamping part (22, 42, 62) and a component in the third direction of the first clamping part (22, 42, 62),
wherein the second protrusion arrangement (30) of the second clamping part (23, 43, 63) is arranged on the second clamping part (23, 43, 63) in a fifth direction of the second clamping part (23, 43, 63) starting from the first protrusion arrangement (28) of the second clamping part (23, 43, 63) (23, 43, 63), which fifth direction of the second clamping part (23, 43, 63) has a component in the second direction of the second clamping part (23, 43, 63) and a component in the third direction of the second clamping part (23, 43, 63).

9. Coupling device (21, 41, 61) according to claim 8, **characterised in that** the second protrusion arrangement (28) of the first clamping part (22, 42, 62) is arranged on a half of the first clamping part (22, 42, 62) lying in the fourth direction of the first clamping part (22, 42, 62) 42, 62) and that the second protrusion arrangement (30) of the second clamping part (23, 43, 63) is arranged on a half of the second clamping part (23, 43, 63) lying in the second direction of the second clamping part (23, 43, 63).

10. Coupling device (21, 41, 61) according to claim 8 or 9, **characterised in that** the component of the fifth direction of the first clamping part (22, 42, 62) directed in the fourth direction of the first clamping part (22, 42, 62) is approximately equal in magnitude to the component of the fifth direction of the first clamping part (22, 42, 62) directed in the third direction of the first clamping part (22, 42, 62),
wherein the component of the fifth direction of the second clamping part (23, 43, 63) directed in the second direction of the second clamping part (23, 43, 63) is approximately equal in magnitude to the component of the fifth direction of the second clamping part (23, 43, 63) directed in the third direction of the second clamping part (23, 43, 63).

11. Coupling device (1, 21, 41, 61, 81) according to one of claims 1 to 10, **characterised in that** the two clamping parts (2, 3, 22, 23, 42, 43, 62, 63, 82, 83) are each made of a plastic or a metal, in particular aluminium or steel.

12. Coupling device (81) according to any one of claims 1 to 11, **characterised in that** the two clamping parts (82, 82) are each made of bent sheet steel.

13. Coupling device (1, 21, 41, 61, 81) according to one of claims 1 to 12, **characterised in that** the clamping device (4, 24, 44, 64, 84) comprises a screw.

14. Arrangement (300, 320, 340, 360, 380) comprising two elements (100, 200) to be joined, which elements (100, 200) each have a notch (101, 201) recessed by at least one recess (102a, 102b, 202a, 202b), in particular a notch (101, 201) recessed on both sides with at least one recess (102a, 102b, 202a, 202b) and thus with at least two recesses (102a, 102b, 202a, 202b), and which arrangement (300, 320, 340, 360, 380) comprises at least one coupling device (1, 21, 41, 61, 81) according to one of claims 1 to 13.

## Revendications

1. Dispositif d'accouplement (1, 21, 41, 61, 81) pour relier deux éléments à relier (100, 200), lesquels deux éléments (100, 200) comportent respectivement des deux côtés une rainure (101, 201) réalisée en contre-dépouille des deux côtés avec respectivement au moins une contre-dépouille (102a, 102b, 202a, 202b) et de ce fait avec au moins deux contre-dépouilles (102a, 102b, 202a, 202b),
a) sachant que le dispositif d'accouplement (1, 21, 41, 61, 81) comprend une première pièce de serrage (2, 22, 42, 62, 82) et une deuxième pièce de serrage (3, 23, 43, 63, 83) et de ce fait deux pièces de serrage (2, 3, 22, 23, 42, 43, 62, 63, 82, 83),
- sachant que pour les deux des deux pièces de serrage (2, 3, 22, 23, 42, 43, 62, 63, 82, 83) est respectivement définie une direction longitudinale, une première direction orientée perpendiculairement à la direction longitudinale, une deuxième direction orientée aussi bien perpendiculairement à la direction longitudinale que perpendiculairement à la première direction, une troisième direction orientée opposée à la première direction et une quatrième direction orientée opposée à la deuxième direction,
- sachant que la première pièce de serrage (2, 22, 42, 62, 82) comporte une surface fonctionnelle (5, 85), laquelle surface fonctionnelle (5, 85) est inclinée en direction longitudinale de la première pièce de serrage (2, 22, 42, 62, 82) et la deuxième pièce de serrage (3, 23, 43, 63, 83) comporte une surface fonctionnelle (6, 86), laquelle surface fonctionnelle (6, 86) est inclinée en direction longitudinale de la deuxième pièce de serrage (3, 23, 43, 63, 83),
- sachant que la première pièce de serrage (2, 22, 42, 62, 82) comporte un premier agencement en saillie (7, 27, 87) faisant saillie dans la première direction de la première pièce de serrage (2, 22, 42, 62, 82) pour venir saisir par l'arrière une première au moins de contre-dépouille (102a) de la rainure (101) dans un premier des deux éléments à relier (100) et la deuxième pièce de serrage (3, 23, 43, 63, 83) comporte un premier agencement en saillie (8, 28, 88) faisant saillie dans la première direction de la deuxième pièce de serrage (3, 23, 43, 63, 83) pour saisir par l'arrière une première au moins de contre-dépouille (202a) de la rainure (201) dans un deuxième des deux éléments à relier (200),
b) sachant que le dispositif d'accouplement (1, 21, 41, 61, 81) comprend un système de serrage (4, 24, 44, 64, 84) pour le serrage l'une sur l'autre des deux pièces de serrage (2, 3, 22, 23, 42, 43, 62, 63, 82, 83) pour l'essentiel le long d'un axe longitudinal du dispositif d'accouplement (1, 21, 41, 61, 81),
sachant que dans l'état monté du dispositif d'accouplement (1, 21, 41, 61, 81), les deux pièces de serrage (2, 3, 22, 23, 42, 43, 62, 63, 82, 83) sont respectivement orientées avec leur direction longitudinale pour l'essentiel le long de l'axe longitudinal du dispositif d'accouplement (1, 21, 41, 61, 81), alors que la première direction de la première pièce de serrage (2, 22, 42, 62, 82) et la première direction de la deuxième pièce de serrage (3, 23, 43, 63, 83) sont pour l'essentiel orientées parallèlement l'une à l'autre et la deuxième direction de la première pièce de serrage (2, 22, 42, 62, 82) et la deuxième direction de la deuxième pièce de serrage (3, 23, 43, 63, 83) sont pour l'essentiel orientées parallèlement l'une à l'autre et les deux pièces de serrage (2, 3, 22, 23, 42, 43, 62, 63, 82, 83) sont respectivement disposées avec leurs surfaces fonctionnelles (5, 6, 85, 86) le long de l'axe longitudinal tournées l'une vers l'autre l'une derrière l'autre et peuvent être serrées l'une sur l'autre ou sont être serrées l'une sur l'autre par le système de serrage (4, 24, 44, 64, 84) le long de l'axe longitudinal, sachant que, lorsque les deux pièces de serrage (2, 3, 22, 23, 42, 43, 62, 63, 82, 83) sont serrées par le système de serrage (4, 24, 44, 64, 84) l'une sur l'autre le long de l'axe longitudinal, en raison de la coopération des surfaces fonctionnelles (5, 6, 85, 86), la première pièce de serrage (2, 22, 42, 62, 82) et la deuxième pièce de serrage (3, 23, 43, 63, 83) sont comprimées l'une par rapport à l'autre dans une direction transversalement à l'axe longitudinal du dispositif d'accouplement (1, 21, 41, 61, 81) de telle manière que le premier agencement en saillie (7, 27, 87) disposé sur la première pièce de serrage (2, 22, 42, 62, 82) et le premier agencement en saillie (8, 28, 88) disposé sur la deuxième pièce de serrage (3, 23, 43, 63, 83) sont poussés l'un vers l'autre,
- sachant qu'un vecteur normal situé perpendiculairement sur la surface fonctionnelle (5, 85) de la première partie de serrage (2, 22, 42, 62, 82) comporte aussi bien un composant dirigé dans la première direction de la première pièce de serrage (2, 22, 42, 62, 82) qu'un composant dirigé dans la deuxième direction de la première pièce de serrage (2, 22, 42, 62, 82) et sachant
- qu'un vecteur normal situé perpendiculairement sur la surface fonctionnelle (6, 86) de la deuxième pièce de serrage (3, 23, 43, 63, 83) comporte aussi bien un composant dirigé dans la troisième direction de la deuxième pièce de serrage (3, 23, 43, 63, 83) qu'un composant dirigé dans la quatrième direction de la deuxième pièce de serrage (3, 23, 43, 63, 83),
sachant que la première pièce de serrage (2, 22, 42, 62, 82) comporte un deuxième agencement en saillie (9, 29, 89) faisant saillie dans la troisième direction de la première pièce de serrage (2, 22, 42, 62, 82) et la deuxième pièce de serrage (3, 23, 43, 63, 83) comporte un deuxième agencement en saillie (10, 30, 90) faisant saillie dans la troisième direction de la deuxième pièce de serrage (3, 23, 43, 63, 83), sachant que, soit
c) le deuxième agencement en saillie (9, 89) de la première pièce de serrage (2, 82) sert à la saisie par l'arrière d'une deuxième au moins des deux contre-dépouilles (102b) de la rainure (101) dans le premier des deux éléments à relier (100), alors que le deuxième agencement en saillie (10, 90) de la deuxième pièce de serrage (200) sert à la saisie par l'arrière d'une deuxième au moins des deux contre-dépouilles (202b) de la rainure (201) dans le deuxième des deux éléments à relier (200),
soit
d) le deuxième agencement en saillie (29) de la première pièce de serrage (22, 42, 62) sert à la saisie par l'arrière d'une deuxième au moins des deux contre-dépouilles (202b) de la rainure (201) dans le deuxième des deux éléments à relier (200), alors que le deuxième agencement en saillie (30) de la deuxième pièce de serrage (23, 43, 63)) sert à la saisie par l'arrière d'une deuxième au moins des deux contre-dépouilles (102b) de la rainure (101) dans le premier des deux éléments à relier (100).

2. Dispositif d'accouplement (1, 21, 41, 61, 81) selon la revendication 1, **caractérisé en ce que**
- pour la première pièce de serrage (2, 22, 42, 62, 82), un angle mesuré dans un plan tendu par la direction longitudinale et la première direction situé entre la surface fonctionnelle (5, 85) et la première direction est au moins de 30°, **en ce que**
- pour la première pièce de serrage (2, 22, 42, 62, 82), un angle mesuré dans un plan tendu par la direction longitudinale et la deuxième direction situé entre la surface fonctionnelle (5, 85) et la deuxième direction est au moins de 30°, **en ce que**
- pour la deuxième pièce de serrage (3, 23, 43, 63, 83), un angle mesuré dans un plan tendu par la direction longitudinale et la troisième direction situé entre la surface fonctionnelle (6, 86) et la troisième direction est au moins de 30°, et **en ce que**
- pour la deuxième pièce de serrage (3, 23, 43, 63, 83), un angle mesuré dans un plan tendu par la direction longitudinale et la quatrième direction situé entre la surface fonctionnelle (6, 86) et la quatrième direction est au moins de 30°.

3. Dispositif d'accouplement (1, 21, 41, 61, 81) selon la revendication 1 ou 2, **caractérisé en ce que**
- pour la première pièce de serrage (2, 22, 42, 62, 82), un angle mesuré dans un plan tendu par la direction longitudinale et la première direction situé entre la surface fonctionnelle (5, 85) et la première direction est au maximum de 60°, **en ce que**
- pour la première pièce de serrage (2, 22, 42, 62, 82), un angle mesuré dans un plan tendu par la direction longitudinale et la deuxième direction situé entre la surface fonctionnelle (5, 85) et la deuxième direction est au maximum de 60°, **en ce que**
- pour la deuxième pièce de serrage (3, 23, 43, 63, 83), un angle mesuré dans un plan tendu par la direction longitudinale et la troisième direction situé entre la surface fonctionnelle (6, 86) et la troisième direction est au maximum de 60°, et **en ce que**
- pour la deuxième pièce de serrage (3, 23, 43, 63, 83), un angle mesuré dans un plan tendu par la direction longitudinale et la quatrième direction situé entre la surface fonctionnelle (6, 86) et la quatrième direction est au maximum de 60°.

4. Dispositif d'accouplement (1, 21, 41, 61, 81) selon l'une quelconque des revendications précédentes 1 à 3, **caractérisé en ce que** le premier agencement en saillie (7, 27, 87) de la première pièce de serrage (2, 22, 42, 62, 82) est disposé sur une moitié de la première pièce de serrage (2, 22, 42, 62, 82), située dans la deuxième direction de la première pièce de serrage (2, 22, 42, 62, 82) et **en ce que** le premier agencement en saillie (8, 28, 88) de la deuxième pièce de serrage (3, 23, 43, 63, 83) est disposé sur une moitié de la deuxième pièce de serrage (3, 23, 43, 63, 83), située dans la quatrième direction de la deuxième pièce de serrage (3, 23, 43, 63, 83).

5. Dispositif d'accouplement (1, 21, 41, 61, 81) selon l'une quelconque des revendications 1 à 4, **caractérisé en ce que** le premier agencement en saillie (7, 27, 87) de la première pièce de serrage (2, 22, 42, 62, 82) forme, considéré en direction longitudinale de la première pièce de serrage (2), dans une zone d'une première extrémité opposée à la surface fonctionnelle (5, 85) de la première pièce de serrage (2, 22, 42, 62, 82) , une saillie pour saisir par l'arrière la première d'au moins une contre-dépouille (102a) de la rainure (101) dans le premier des deux éléments à relier (100) et **en ce que** le premier agencement en saillie (8, 28, 88) de la deuxième pièce de serrage (3, 23, 43, 63, 83), forme, considéré en direction longitudinale de la deuxième pièce de serrage (3, 23, 43, 63, 83), dans une zone d'une première extrémité de la deuxième pièce de serrage (3, 23, 43, 63, 83), opposée à la surface fonctionnelle (6, 86) de la deuxième pièce de serrage (3, 23, 43, 63, 83), une saillie pour saisir par l'arrière la première d'au moins une contre-dépouille (202a) de la rainure (201) dans le deuxième des deux éléments à relier (200).

6. Dispositif d'accouplement (1, 81) selon l'une quelconque des revendications 1 à 5, **caractérisé en ce que** le deuxième agencement en saillie (9, 89) de la première pièce de serrage (2, 82) sert à saisir par l'arrière la deuxième au moins des deux contre-dépouilles (102b) de la rainure (101) dans le premier des deux éléments à relier (100), alors que le deuxième agencement en saillie (10, 90) de la deuxième pièce de serrage (3, 83) sert à saisir par l'arrière la deuxième au moins des deux contre-dépouilles (202b) de la rainure (201) dans le deuxième des deux éléments à relier (200),
sachant que le deuxième agencement en saillie (9, 89) de la première pièce de serrage (2, 82) est disposé sur la première pièce de serrage (2, 82) en partant du premier agencement en saillie (7, 87) de la première pièce de serrage (2, 82) dans la troisième direction de la première pièce de serrage (2, 82) et
sachant que le deuxième agencement en saillie (10, 90) de la deuxième pièce de serrage (3, 83) est disposé sur la deuxième pièce de serrage (3, 83) en partant du premier agencement en saillie (9, 89) de la deuxième pièce de serrage (3, 83) dans la troisième direction de la deuxième pièce de serrage (3, 83).

7. Dispositif d'accouplement (1, 81) selon la revendication 6, **caractérisé en ce que** le deuxième agencement en saillie (9, 89) de la première pièce de serrage (2, 82) est disposé sur la moitié de la première pièce de serrage (2, 82), située dans la deuxième direction de la première pièce de serrage (2, 82) et **en ce que** le deuxième agencement en saillie (10, 90) de la deuxième pièce de serrage (3, 83) est disposé sur la moitié de la deuxième pièce de serrage (3, 83), située dans la quatrième direction de la deuxième pièce de serrage (3, 83).

8. Dispositif d'accouplement (22, 42, 62) selon l'une quelconque des revendications 1 à 5, **caractérisé en ce que** le deuxième agencement en saillie (28) de la première pièce de serrage (22, 42, 62) sert à saisir par l'arrière la deuxième au moins des deux contre-dépouilles (202b) de la rainure (202) dans le deuxième des deux éléments à relier (200), alors que le deuxième agencement en saillie (30) de la deuxième pièce de serrage (23, 43, 63) sert à saisir par l'arrière la deuxième au moins des deux contre-dépouilles (102b) de la rainure (101) dans le premier des deux éléments à relier (100),
sachant que le deuxième agencement en saillie (28) de la première pièce de serrage (22, 42, 62) est disposé sur la première pièce de serrage (22, 42, 62) en partant du premier agencement en saillie (27) de la première pièce de serrage (22, 42, 62) dans une cinquième direction de la première pièce de serrage (22, 42, 62), laquelle cinquième direction de la première pièce de serrage (22, 42, 62) comporte un composant dans la quatrième direction de la première pièce de serrage (22, 42, 62) et un composant dans la troisième direction de la première pièce de serrage (22, 42, 62),
sachant que le deuxième agencement en saillie (30) de la deuxième pièce de serrage (23, 43, 63) est disposé sur la deuxième pièce de serrage (23, 43, 63) en partant du premier agencement en saillie (28) de la deuxième pièce de serrage (23, 43, 63) dans une cinquième direction de la deuxième pièce de serrage (23, 43, 63), laquelle cinquième direction de la deuxième pièce de serrage (23, 43, 63) comporte un composant dans la deuxième direction de la deuxième pièce de serrage (23, 43, 63) et un composant dans la troisième direction de la deuxième pièce de serrage (23, 43, 63).

9. Dispositif d'accouplement (21, 41, 61) selon la revendication 8, **caractérisé en ce que** le deuxième agencement en saillie (28) de la première pièce de serrage (22, 42, 62) est disposé sur une moitié de la première pièce de serrage (22, 42, 62), située dans la quatrième direction de la première pièce de serrage (22, 42, 62) et **en ce que** le deuxième agencement en saillie (30) de la deuxième pièce de serrage (23, 43, 63) est disposé sur une moitié de la deuxième pièce de serrage (23, 43, 63), située dans la deuxième direction de la deuxième pièce de serrage (23, 43, 63).

10. Dispositif d'accouplement (21, 41, 61) selon la revendication 8 ou 9, **caractérisé en ce que** le composant orienté dans la quatrième direction de la première pièce de serrage (22, 42, 62) de la cinquième direction de la première pièce de serrage (22, 42, 62) est à peu près aussi grand que le composant orienté dans la troisième direction de la première pièce de serrage (22, 42, 62) de la cinquième direction de la première pièce de serrage (22, 42, 62),
sachant que le composant orienté dans la deuxième direction de la deuxième pièce de serrage (23, 43, 63) de la cinquième direction de la deuxième pièce de serrage (23, 43, 63) est à peu près aussi grand que le composant orienté dans la troisième direction de la deuxième pièce de serrage (23, 43, 63) de la cinquième direction de la deuxième pièce de serrage (23, 43, 63).

11. Dispositif d'accouplement (1, 21, 41, 61, 81) selon l'une quelconque des revendications 1 à 10, **caractérisé en ce que** les deux pièces de serrage (2, 3, 22, 23, 42, 43, 62, 63, 82, 83) sont fabriquée dans une matière plastique ou dans un métal, en particulier de l'aluminium ou de l'acier.

12. Dispositif d'accouplement (81) selon l'une quelconque des revendications 1 à 11, **caractérisé en ce que** les deux pièces de serrage (82, 82) sont fabriquées en tôle d'acier cintrée.

13. Dispositif d'accouplement (1, 21, 41, 61, 81) selon l'une quelconque des revendications 1 à 12, **caractérisé en ce que** le système de serrage (4, 24, 44, 64, 84) comprend une vis.

14. Agencement (300, 320, 340, 360, 380), lequel comprend deux éléments à relier (100, 200), lesquels éléments (100, 200) comportent respectivement une rainure (101, 201) réalisée en contre-dépouille avec au moins une contre-dépouille (102a, 102b, 202a, 202b), en particulier une rainure (101, 201) réalisée en contre-dépouille des deux côtés avec respectivement au moins une contre-dépouille (102a, 102b, 202a, 202b) et de ce fait avec au moins deux contre-dépouilles (102a, 102b, 202a, 202b), lequel agencement (300, 320, 340, 360, 380) comprend au moins un dispositif d'accouplement (1, 21, 41, 61, 81) selon l'une quelconque des revendications 1 à 13.
